# EUROPEAN PATENT APPLICATION

(11) **EP 3 007 315 A1**
(43) Date of publication of application: **13.04.2016**
(21) Application number: 14807946.0
(22) Date of filing: 22.04.2014
(51) Int. Cl.: H02J 7/10, H01M 10/44, H01M 10/48, H02J 7/00, H02M 3/00, H02M 7/12, B60L 11/18

(54) **CHARGE/DISCHARGE DEVICE**

(30) Priority: 03.06.2013 JP 2013116810
(71) Applicant: Panasonic Intellectual Property Management Co., Ltd., Osaka-shi, Osaka 540-6207 (JP)
(72) Inventor: IGUCHI, Akihiko, 1-61, Shiromi 2-chome Chuo-ku, Osaka 540-6207 (JP); AKIMASA, Koji, 1-61, Shiromi 2-chome Chuo-ku, Osaka 540-6207 (JP); YOSHIDA, Koji, 1-61, Shiromi 2-chome Chuo-ku, Osaka 540-6207 (JP); MORIGUCHI, Satoshi, 1-61, Shiromi 2-chome Chuo-ku, Osaka 540-6207 (JP); MOURI, Masaaki, 1-61, Shiromi 2-chome Chuo-ku, Osaka 540-6207 (JP); RADENAMAD, Damri, 1-61, Shiromi 2-chome Chuo-ku, Osaka 540-6207 (JP); TIPPAYAWAT, Laksamee, 1-61, Shiromi 2-chome Chuo-ku, Osaka 540-6207 (JP)
(74) Representative: Vigand, Philippe
(86) International application number: PCT/JP2014/002253
(87) International publication number: WO 2014/196121

(57) **Abstract**

A charge-discharge device includes a DC-DC converter configured to be electrically connected to a secondary battery, an inverter electrically connected to the DC-DC converter, a main charging terminal electrically connected to the inverter, a voltage detector for detecting a voltage of the main charging terminal, and a control circuit electrically connected to the DC-DC converter, the inverter, and the voltage detector. While the secondary battery is charged with a voltage input to the main charging terminal, when the voltage detected by the voltage detector is a DC voltage, the control circuit switches, according to the voltage, between an operation to cause the inverter to supply the voltage substantially intactly to the DC-DC converter, and cause the DC-DC converter to charge the secondary battery and an operation to cause the inverter to function as a DC voltage conversion circuit that converts the voltage and supplies the converted voltage to the DC-DC converter, and cause the DC-DC converter to charge the secondary battery. This charge-discharge device enables secondary batteries to interchange electric power with each other via a simple, light-weight outlet cable.

## Description

### TECHNICAL FIELD

The present invention relates to a charge-discharge device that can charge and discharge a secondary battery.

### BACKGROUND ART

PTL 1 discloses a charging system in which an electric vehicle that has run out of electric power during use receives power temporarily from another electric vehicle.

FIG. 14 is a schematic view of conventional charging system 501 disclosed in PTL 1. Charging system 501 includes electric vehicles 101 and 103, and emergency charging cable 125. Each of electric vehicles 101 and 103 includes battery 105, controller 107, positive-electrode contactor 109, precharge contactor 111, precharge resistor 113, negative-electrode contactor 115, and connection port 123. Connection port 123 includes terminals 117, 119, and 121.

Positive-electrode contactor 109, precharge contactor 111, and negative-electrode contactor 115 are connected and disconnected under the control of controller 107. In each vehicle, controller 107 is connected to terminal 121 of connection port 123. Connectors 127 and 129 of emergency charging cable 125 are connected to respective connection ports 123, so that each controller 107 can communicate with the controller of emergency charging cable 125.

Each of electric vehicles 101 and 103 may have on-board charger 131. When plug 133 is connected to a commercial power supply (alternating-current (AC) power supply), on-board charger 131 can convert AC power supplied from the AC power supply to direct-current (DC) power, and supply a charging current to battery 105.

Emergency charging cable 125 includes power-feeding cable 135, power-receiving cable 137, and control box 139. Control box 139 accommodates a buck-boost circuit and the controller therein.

An operation of charging system 501 with battery 105 of electric vehicle 103 charged with the power stored in battery 105 of electric vehicle 101 will be described below. The controller of control box 139 compares a state of charge SOC1 of battery 105 of power-supplying electric vehicle 101 with a state of charge SOC2 of battery 105 of power-receiving electric vehicle 103.

When the state of charge SOC1 is not larger than the state of charge SOC2, this means that power is supplied either from battery 105 with the lower state of charge SOC1 to battery 105 with the larger state of charge SOC2, or from battery 105 to battery 105 with the same state of charge. In this case, the controller of control box 139 determines that it is improper to connect and charge battery 105 of electric vehicle 103 with battery 105 of electric vehicle 101.

When the state of charge SOC1 is larger than the state of charge SOC2, first of all, in each vehicle, controller 107 turns on precharge contactor 111 and negative-electrode contactor 115. Precharge resistor 113 disposed between the contactors prevents a large current from flowing due to inrush current immediately after connection. Next, controller 107 turns on positive-electrode contactor 109 and turn off precharge contactor 111. This starts "vehicle-to-vehicle charge" in which battery 105 of one of electric vehicles 103 and 105 is charged with battery 105 of the other electric vehicle.

PTL 1 discloses that in charging system 501, when running out of power during use, vehicle 101 can receive power temporarily from electric vehicle 103. In charging system 501, a large current flows between the two vehicles at the start of the vehicle-to-vehicle charge since precharge contactor 111 is turned on at the start of the vehicle-to-vehicle charge. This requires power-feeding cable 135 and power-receiving cable 137 to be thick enough to allow the large current to flow, hence causing emergency charging cable 125 to be heavy. Therefore, for example, electric vehicle 101 provided with emergency charging cable 125 runs less efficiently for the weight of cable 125, possibly having a shorter travel distance. In addition, the overall structure of emergency charging cable 125 is complicated by the buck-boost circuit, which is independently provided in control box 139 of emergency charging cable 125 in order to control the electric power.

### CITATION LIST

### PATENT LITERATURE

PTL1: Japanese Patent Laid-Open Publication No. 2011-188588

### SUMMARY

A charge-discharge device includes a DC-DC converter configured to be electrically connected to a secondary battery, an inverter electrically connected to the DC-DC converter, a main charging terminal electrically connected to the inverter, a voltage detector for detecting a voltage of the main charging terminal, and a control circuit electrically connected to the DC-DC converter, the inverter, and the voltage detector. While the secondary battery is charged with a voltage input to the main charging terminal, when the voltage detected by the voltage detector is a DC voltage, the control circuit switches, according to the voltage, between an operation to cause the inverter to supply the voltage substantially intactly to the DC-DC converter, and cause the DC-DC converter to charge the secondary battery and an operation to cause the inverter to function as a DC voltage conversion circuit that converts the voltage and supplies the converted voltage to the DC-DC converter, and cause the DC-DC converter to charge the secondary battery.

This charge-discharge device enables secondary batteries to interchange electric power with each other via a simple, light-weight outlet cable.

### BRIEF DESCRIPTION OF DRAWINGS

FIG. 1 is a block circuit diagram of a charge-discharge device according to Exemplary Embodiment 1 of the present invention.
FIG. 2 is a block circuit diagram of the charge-discharge device according to Embodiment 1.
FIG. 3 is a flowchart showing an operation of the charge-discharge device according to Embodiment 1.
FIG. 4A is a flowchart showing another operation of the charge-discharge device according to Embodiment 1.
FIG. 4B is a flowchart showing still another operation of the charge-discharge device according to Embodiment 1.
FIG. 4C is a flowchart showing a further operation of the charge-discharge device according to Embodiment 1.
FIG. 5 is a block circuit diagram of a charge-discharge device according to Exemplary Embodiment 2 of the present invention.
FIG. 6 is a flowchart showing an operation of the charge-discharge device according to Embodiment 2.
FIG. 7A is a flowchart showing another operation of the charge-discharge device according to Embodiment 2.
FIG. 7B is a flowchart showing still another operation of the charge-discharge device according to Embodiment 2.
FIG. 7C is a flowchart showing a further operation of the charge-discharge device according to Embodiment 2.
FIG. 8 is a block circuit diagram of a charge-discharge device according to Exemplary Embodiment 3 of the present invention.
FIG. 9 is a flowchart showing an operation of the charge-discharge device according to Embodiment 3.
FIG. 10A is a flowchart showing another operation of the charge-discharge device according to Embodiment 3.
FIG. 10B is a flowchart showing a further operation of the charge-discharge device according to Embodiment 3.
FIG. 10C is a flowchart showing a further operation of the charge-discharge device according to Embodiment 3.
FIG. 11 is a block circuit diagram of a charge-discharge device according to Exemplary Embodiment 4 of the present invention.
FIG. 12A is a flowchart showing an operation of the charge-discharge device according to Embodiment 4.
FIG. 12B is a flowchart showing the operation of the charge-discharge device according to Embodiment 4.
FIG. 13A is a flowchart showing another operation of the charge-discharge device according to Embodiment 4.
FIG. 13B is a flowchart showing another operation of the charge-discharge device according to Embodiment 4.

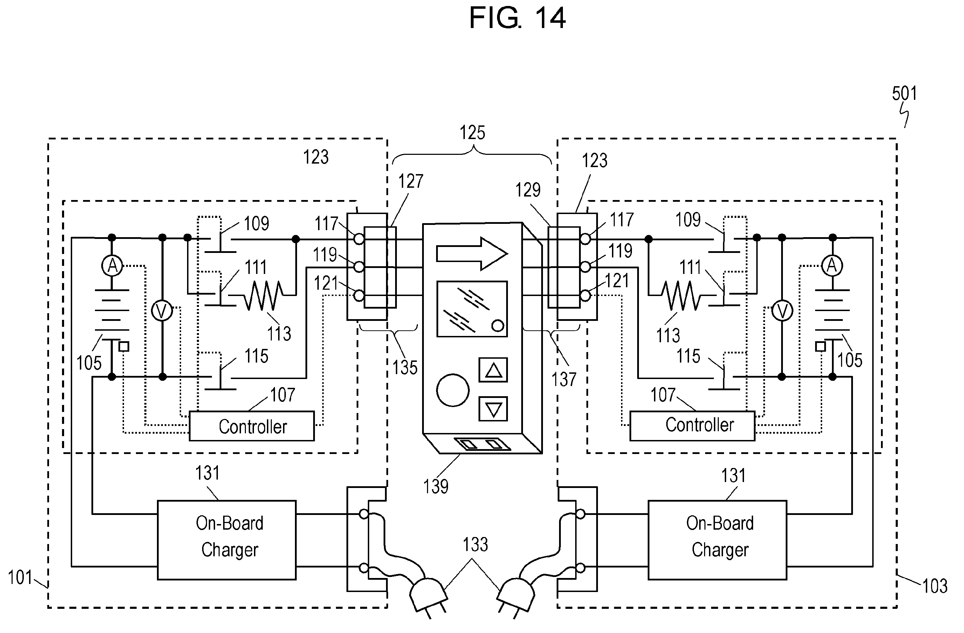

FIG. 14 is a configuration diagram of a conventional charging system.

### DETAIL DESCRIPTION OF PREFERRED EMBODIMENTS

### Exemplary Embodiment 1

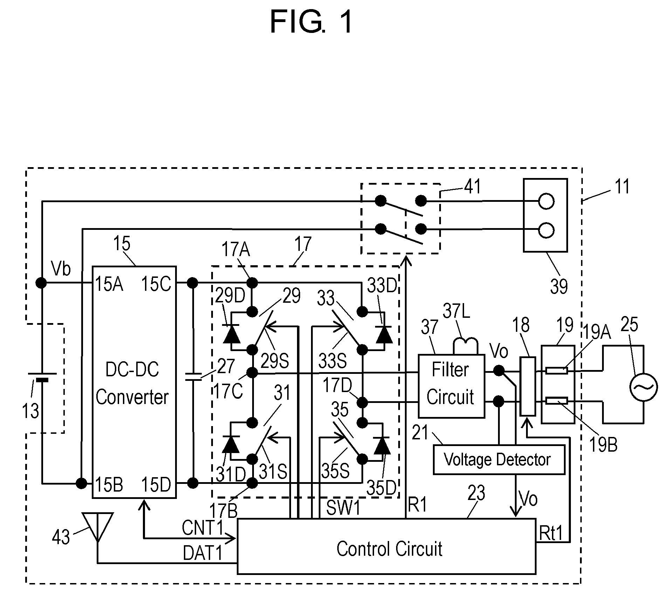

FIG. 1 is a block circuit diagram of charge-discharge device 11 according to Exemplary Embodiment 1 of the present invention. According to Embodiment 1, charge-discharge device 11 is mounted to an electric vehicle and used with secondary battery 13 mounted to the electric vehicle. Charge-discharge device 11 shown in FIG. 1 charges secondary battery 13 with an alternating-current (AC) power supplied from commercial AC power supply 25.

Charge-discharge device 11 includes DC-DC converter 15 configured to be electrically connected to secondary battery 13, inverter 17 electrically connected to DC-DC converter 15, main charging terminal 19 electrically connected to inverter 17, voltage detector 21 electrically connected to inverter 17, and control circuit 23. Control circuit 23 is electrically connected to DC-DC converter 15, inverter 17, and voltage detector 21. While secondary battery 13 is charged through main charging terminal 19, when a main charging-terminal voltage Vo, which is a voltage of main charging terminal 19 detected by voltage detector 21, is an AC voltage, control circuit 23 causes inverter 17 to function as a rectifying circuit. Control circuit 23 then causes DC-DC converter 15 to charge secondary battery 13. When the charging-terminal voltage Vo is a direct-current (DC) voltage, control circuit 23 causes inverter 17 to output the voltage Vo substantially intactly. Control circuit 23 then causes DC-DC converter 15 to charge secondary battery 13.

Thus, control circuit 23 controls inverter 17 depending on whether the main charging-terminal voltage Vo is an AC voltage or a DC voltage. This configuration allows secondary battery 13 to be charged regardless of whether the power supplied through main charging terminal 19 is an AC voltage or a DC voltage. A circuitry for charging secondary battery 13 from commercial AC power supply 25 can be used to charge secondary battery 13 with DC power supplied temporarily from another vehicle, such as an electric vehicle. The circuitry prevents a large current from flowing, and hence, does not require a thick outlet cable. Furthermore, control circuit 23 controls the electric charging from another vehicle, eliminating the need to provide an independent buck-boost circuit. Therefore, charge-discharge device 11 allows two vehicles to interchange electric power with each other via a simple, light-weight outlet cable.

Construction and operation of charge-discharge device 11 will be detailed below.

Charge-discharge device 11 is configured to be mounted to a vehicle, an electric vehicle. Charge-discharge device 11 is configured to be used with secondary battery 13 which is also mounted to the vehicle and stores power to drive the vehicle. Secondary battery 13 may be, for example, a lithium-ion battery, and is electrically connected to a motor for driving the vehicle. The vehicle runs on the motor driven by the power stored in secondary battery 13. A voltage of secondary battery 13 at full charge is a secondary-battery voltage Vb. Secondary-battery voltage Vb is about 130 V, which is close to the peak voltage (141 V) of commercial AC power supply 25 having an effective voltage of 100 V. However, the effective voltage and peak voltage of AC power supply 25 and the secondary-battery voltage Vb of secondary battery 13 at full charge are not limited to the above mentioned values.

DC-DC converter 15 having ports 15A to 15D through which voltages are input and output. Dc-Dc converter 15 is a bidirectional DC-DC converter, which can convert a DC voltage input between ports 15A and 15B to output the converted DC voltage through ports 15C and 15D, and can also convert a DC voltage input between ports 15 and 15D to output the converted DC voltage through ports 15A and 15B. Ports 15A and 15B of DC-DC converter 15 are configured to be electrically connected to secondary battery 13. DC-DC converter 15 can charge secondary battery 13 with the power output through ports 15A and 15B. In the case that the power stored in secondary battery 13 is used for a purpose other than driving the vehicle, DC-DC converter 15 can discharge secondary battery 13 by inputting the power through ports 15A and 15B. Since a voltage of about 100 V sent from inverter 17 to main charging terminal 19 via main relay 18 is largely different from the secondary-battery voltage Vb during discharge, DC-DC converter 15 is an isolated DC-DC converter in which ports 15A and 15B are isolated from ports 15C and 15D to prevent ports 15A and 15B from being directly connected to ports 15C and 15D.

Main relay 18 prevents the power of secondary battery 13 from being inadvertently output through main charging terminal 19 when terminal 19 is not connected to anything.

Ports 15C and 15D of DC-DC converter 15, which are not connected to secondary battery 13, are electrically connected to smoothing capacitor 27 and inverter 17. Inverter 17 includes a bridge circuit having switching elements 29, 31, 33, and 35 which are bridge-connected. Switching element 29 is connected in series between nodes 17A and 17C. Switching element 31 is connected in series between nodes 17B and 17C. Switching element 33 is connected in series between nodes 17A and 17D. Switching element 35 is connected in series between nodes 17B and 17D. Switching elements 29 and 31 are connected in series to each other at node 17C. Switching elements 29 and 33 are connected in series to each other at node 17A. Switching elements 31 and 35 are connected in series to each other at node 17B. Switching elements 33 and 35 are connected in series to each other at node 17D. These switching elements can be implemented by, for example, semiconductor switching elements, such as field effect transistors. Each of the switching elements includes a switch and a parasitic diode connected in parallel with the switch. More specifically, switching element 29 includes switch 29S and parasitic diode 29D connected in parallel with switch 29S. Switching element 31 includes switch 31S and parasitic diode 31D connected in parallel with switch 31S. Switching element 33 includes switch 33S and parasitic diode 33D connected in parallel with switch 33S. Switching element 35 includes switch 35S and parasitic diode 35D connected in parallel with switch 35S. The anode and cathode of parasitic diode 29D are connected to nodes 17C and 17A, respectively. The anode and cathode of parasitic diode 31D are connected to nodes 17B and 17C, respectively. The anode and cathode of parasitic diode 33D are connected to nodes 17D and 17A, respectively. The anode and cathode of parasitic diode 35D are connected to nodes 17B and 17D, respectively. Parasitic diodes 29D, 31D, 33D, and 35D may be connected in parallel with respective external diodes having higher response speeds than the parasitic diodes. Nodes 17A and 17B are connected to ports 15C and 15D of DC-DC converter 15, respectively. Smoothing capacitor 27 is connected between nodes 17A and 17B. Control circuit 23 outputs switching signal SW1 to turn on and off switches 29S, 31S, 33S, and 35S. Hereinafter, the turning on and off of switching elements 29, 31, 33, and 35 means the turning on and off of switches 29S, 31S, 33S, and 35S. When secondary battery 13 is charged with commercial AC power supply 25 (AC 100 V) connected to main charging terminal 19, all of switching elements 29, 31, 33, and 35 are turned off to cause inverter 17 to function as a rectifying circuit.

When the power stored in secondary battery 13 is used for a purpose other than driving the vehicle, inverter 17 operates as follows.

First, when secondary battery 13 is used in place of commercial AC power supply 25 and the power of secondary battery 13 is output through the vehicle, that is, through main charging terminal 19, control circuit 23 outputs the switching signal SW1 to alternately turn on and off a group of switching elements 29 and 35 and a group of switching elements 31 and 33 at the frequency of AC power supply 25. This generates a rectangular voltage between nodes 17C and 17D of inverter 17. Nodes 17C and 17D of inverter 17 are connected to filter circuit 37. Filter circuit 37 converts the rectangular voltage generated between nodes 17C and 17D of inverter 17 to an AC voltage with a sinusoidal AC waveform, and outputs the voltage through main charging terminal 19. Filter circuit 37 includes inductor 37L and a capacitor.

In the case that the power of secondary battery 13 is output as DC power through main charging terminal 19, charge-discharge device 11 operates as follows. DC-DC converter 15 generates a desired DC voltage between ports 15C and 15D from the power stored in secondary battery 13. Control circuit 23 turns on switching elements 29 and 35 and turns off switching elements 31 and 33 of inverter 17. As a result, the desired DC voltage is output through main charging terminal 19.

When secondary battery 13 is charged by inverter 17 and DC-DC converter 15, AC power supply 25 is connected to main charging terminal 19. Such charge by common commercial AC power supply 25 is referred to as "normal charge".

Charge-discharge device 11 accordance with Embodiment 1 can perform rapid charge in which secondary battery 13 can be charged with power passing through none of inverter 17 and DC-DC converter 15. To perform the rapid charge, charge-discharge device 11 according to Embodiment 1 includes auxiliary charging terminal 39 which is directly electrically connected to secondary battery 13 via auxiliary relay 41. More specifically, auxiliary relay 41 is directly connected to secondary battery 13, whereas auxiliary charging terminal 39 is directly connected to auxiliary relay 41. To perform the rapid charge, a fast charger outside the vehicle is connected to auxiliary charging terminal 39 and supplies power to secondary battery 13.

The fast charger supplies a large current to rapidly charge secondary battery 13. To allow the large current to flow, a thick wire is used as a passage from auxiliary charging terminal 39 to secondary battery 13 via auxiliary relay 41.

Main charging terminal 19 is electrically connected to voltage detector 21 to detect the main charging-terminal voltage Vo. Voltage detector 21 can determine whether the charging-terminal voltage Vo is an AC voltage or a DC voltage. When the voltage Vo is a DC voltage, voltage detector 21 outputs the value of the voltage as voltage Vo, whereas when the voltage Vo is an AC voltage, voltage detector 21 outputs an effective value of the AC voltage as the voltage Vo. When the charging-terminal voltage Vo is an AC voltage, the value of the voltage may be a peak value or another value corresponding to the AC voltage, instead of the effective value. Main charging terminal 19 includes contacts 19A and 19B. The main charging-terminal voltage Vo is a voltage between contacts 19A and 19B. When contact 19A has a higher potential than contact 19B, the voltage Vo is defined as a positive voltage. When contact 19A has a lower potential than contact 19B, the voltage Vo is defined as a negative voltage. When the voltage Vo is a DC voltage, voltage detector 21 can detect the polarity of the voltage Vo, that is, whether the voltage Vo is a positive voltage or a negative voltage.

DC-DC converter 15, switching elements 29, 31, 33, and 35 of inverter 17, main relay 18, auxiliary relay 41, and voltage detector 21 are electrically connected to control circuit 23. Control circuit 23 includes a microcomputer and a peripheral circuit including a memory. Control circuit 23 receives the charging-terminal voltage Vo, and outputs the switching signal SW1 to turn on and off switching elements 29, 31, 33, and 35 of inverter 17. Control circuit 23 further outputs a main relay signal Rt1 to turn on and off main relay 18, and outputs an auxiliary relay signal R1 to turn on and off auxiliary relay 41. Control circuit 23 further outputs a control signal CNT1 to control DC-DC converter 15, and receives from DC-DC converter 15 the control signal CNT1 as the secondary-battery voltage Vb, which is the voltage of secondary battery 13.

Control circuit 23 is electrically connected to antenna 43 via which control circuit 23 can wirelessly communicate with a further charge-discharge device connected to a further secondary battery. This configuration allows control circuit 23 to wirelessly send a data signal DAT1 to a further control circuit of the further charge-discharge device and also to wirelessly receive a further data signal from the further control circuit. Thus, control circuit 23 and the further control circuit wirelessly communicated with each other to detect conditions of secondary battery 13 and the further battery, operating conditions of charge-discharge device 11 and the further charge-discharge device, and other conditions. The wireless communication between charge-discharge device 11 and the further charge-discharge device does not require communication wirings between them, thereby simplifying the configuration.

Charge-discharge device 11 and the further charge-discharge device can operate as described below by using independent communication wiring instead of the wireless communication. Alternatively, these devices can communicate with each other via a power supply line. In this case, filter circuit 37 can be used to separate power from a communication signal.

An operation of charge-discharge device 11 will be described below.

First, an operation of charge-discharge device 11 to perform normal charge with AC power supply 25 will be described below.

Commercial AC power supply 25 (AC 100 V, peak voltage 141 V) is connected to main charging terminal 19. Upon receiving an instruction from a user to start charging, control circuit 23 outputs the main relay signal Rt1 as to turn on main relay 18. Upon receiving the main relay signal Rt1, main relay 18 is turned on, and the main charging-terminal voltage Vo, which is the voltage of the main charging terminal, is supplied to voltage detector 21.

Upon detecting the main charging-terminal voltage Vo, voltage detector 21 supplies, to control circuit 23, a signal indicating whether the voltage Vo is an AC voltage or a DC voltage and a signal indicating the value of the voltage Vo. As a result, control circuit 23 can detect that the voltage Vo received from voltage detector 21 is an AC voltage, and causes inverter 17 to function as a rectifying circuit. More specifically, control circuit 23 outputs the switching signal SW1 as to turn off all of switching elements 29, 31, 33, and 35. Consequently, parasitic diodes 29D, 31D, 33D, and 35D of switching elements 29, 31, 33, and 35 form a bridge circuit, thus causing inverter 17 to function as the rectifying circuit.

A voltage output from inverter 17 functioning as the rectifying circuit is smoothed by smoothing capacitor 27 and input to DC-DC converter 15. DC-DC converter 15 measures the secondary-battery voltage Vb, which is the voltage of secondary battery 13, and sends control circuit 23 the measured voltage as the control signal CNT1. This configuration allows control circuit 23 to feedback control DC-DC converter 15 according to the secondary-battery voltage Vb to charge secondary battery 13. When the voltage Vb is equal to a predetermined full charge voltage, control circuit 23 terminates charging.

Charge-discharge device 11 operates as described above for the normal charge of secondary battery 13.

An operation of charge-discharge device 11 to perform the rapid charge will be described below.

Upon having a rapid-charge connector extending from the above-mentioned fast charger be connected to auxiliary charging terminal 39, the fast charger wirelessly outputs a power-transmission start signal. Upon receiving the power-transmission start signal as the data signal DAT1 at antenna 43, control circuit 23 turns on auxiliary relay 41. As a result, the fast charger is connected directly to secondary battery 13 electrically.

Next, control circuit 23 sends the fast charger the data signal DAT1 in order to inform the fast charger that charge is ready. Upon receiving the signal, the fast charger starts supplying power to secondary battery 13 to start charging secondary battery 13. In this case, the charge of secondary battery 13 is controlled not by charge-discharge device 11 but by the fast charger.

Upon completing the charge of secondary battery 13, the fast charger sends control circuit 23 the data signal DAT1, informing the completion of the charge. Upon receiving the signal, control circuit 23 turns off auxiliary relay 41.

Charge-discharge device 11 operates as described above for the rapid charge of secondary battery 13.

An operation of charge-discharge device 11 for discharging secondary battery 13 through main charging terminal 19 will be described below. This operation is for a purpose other than driving the vehicle, for example, to use an electrical appliance that operates on a commercial AC voltage.

First, a user connects the electrical appliance to main charging terminal 19. Upon receiving, for example, an instruction from the user to supply AC power, control circuit 23 turns on main relay 18. Control circuit 23 then causes DC-DC converter 15 to output a DC voltage between ports 15C and 15D such that the main charging-terminal voltage Vo detected by voltage detector 21 is an AC voltage (for example, 100 V, 60 Hz) required to activate the appliance. Control circuit 23 then outputs the switching signal SW1 to turn on and off switching elements 29, 31, 33, and 35 of inverter 17, thereby generating a rectangular-wave voltage between nodes 17C and 17D. Filter circuit 37 converts the rectangular-wave voltage between nodes 17C and 17D to a sinusoidal AC voltage, and outputs the sinusoidal AC voltage through main charging terminal 19.

Thus, the secondary-battery voltage Vb is converted to an AC voltage and output through main charging terminal 19.

Control circuit 23 monitors the secondary-battery voltage Vb to prevent DC-DC converter 15 from over-charging secondary battery 13. This operation prevents degradation of secondary battery 13.

An operation of charge-discharge device 11 to output DC power through main charging terminal 19 will be described below.

First, a user connects an electronic device to main charging terminal 19. Upon receiving an instruction from the user to supply DC power, control circuit 23 turns on main relay 18 first. Control circuit 23 then outputs the switching signal SW1 to turn on switching elements 29 and 35 and to turn off switching elements 31 and 33 of inverter 17. This operation causes inverter 17 to output the output voltage of DC-DC converter 15 to main charging terminal 19 substantially intactly. Control circuit 23 controls DC-DC converter 15 such that the main charging-terminal voltage Vo detected by voltage detector 21 is a DC voltage required to activate the electronic device. As a result, the secondary-battery voltage Vb can be converted to the above-mentioned DC voltage and output through main charging terminal 19.

In this case, control circuit 23 monitors the secondary-battery voltage Vb to prevent secondary battery 13 from being over discharged. This operation prevents degradation of secondary battery 13.

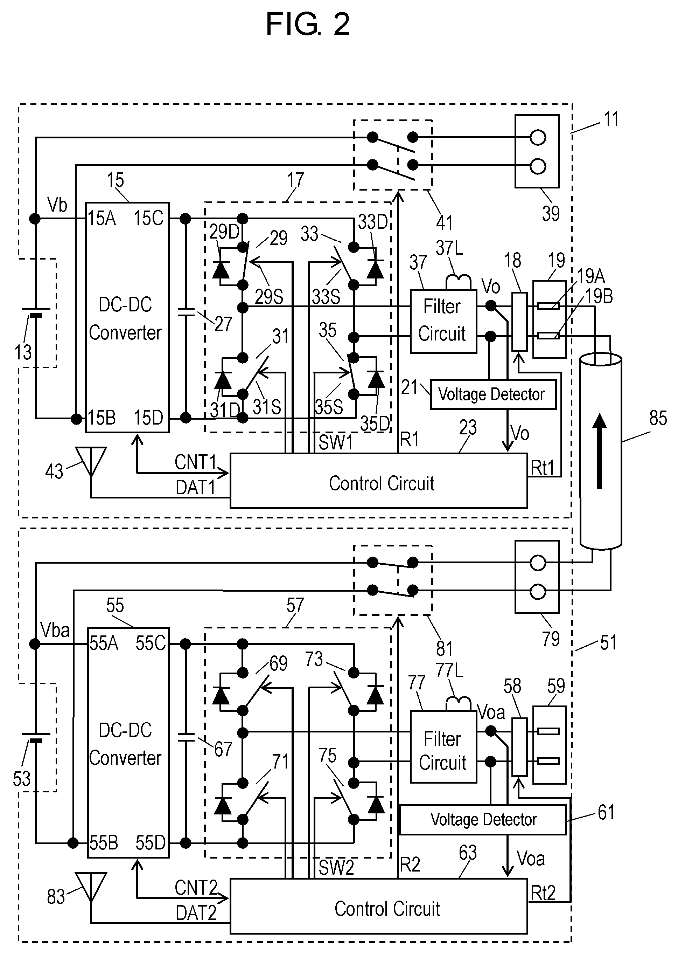

An operation of charge-discharge device 11 to charge secondary battery 13 with the power stored in a secondary battery of another vehicle when secondary battery 13 has run out of power will be described below. FIG. 2 is a circuit diagram of charge-discharge device 11 connected to charge-discharge device 51 mounted to the other vehicle.

Charge-discharge device 51 mounted to the other vehicle has the same configuration as charge-discharge device 11. More specifically, device 51 is configured to be connected to secondary battery 53. Similarly secondary battery 13, secondary battery 53 may be a lithium-ion battery, and is electrically connected to a motor of the other vehicle. A voltage of secondary battery 53 at full charge is a secondary-battery voltage Vba, which is about 200 V, similarly to secondary-battery voltage Vb.

DC-DC converter 55 is a bidirectional isolated DC-DC converter similar to DC-DC converter 15, and includes ports 55A to 55D. Ports 55A and 55B of DC-DC converter 55 are configured to be electrically connected to secondary battery 53.

Ports 55C and 55D of DC-DC converter 55, which are not connected to secondary battery 53, are electrically connected to smoothing capacitor 67 and inverter 57. Inverter 57 includes switching elements 69, 71, 73, and 75 which are connected to form a bridge circuit. Inverter 57 operates similarly to inverter 17, and is connected to further filter circuit 77. Like filter circuit 37, filter circuit 77 includes inductor 77L and a capacitor. Main relay 58 having the same configuration as main relay 18 is connected electrically between filter circuit 77 and main charging terminal 59.

To perform rapid charge of secondary battery 53, charge-discharge device 51 includes auxiliary charging terminal 79 configured to be directly electrically connected to secondary battery 53 via auxiliary relay 81. To allow a large current to flow, a thick wire is used only for a passage from auxiliary charging terminal 79 to secondary battery 53 via auxiliary relay 81.

Main charging terminal 59 is electrically connected to voltage detector 61 in order to detect a main charging-terminal voltage Voa. Like voltage detector 21, voltage detector 61 can determine whether the main charging-terminal voltage Voa is a DC voltage or an AC voltage. When the voltage Voa is a DC voltage, voltage detector 61 can detect the polarity of the voltage Voa.

DC-DC converter 55, switching elements 69, 71, 73, and 75 of inverter 57, main relay 58, auxiliary relay 81, and voltage detector 61 are electrically connected with control circuit 63. Like control circuit 23, control circuit 63 includes a microcomputer and a peripheral circuit including a memory. Control circuit 63 receives the charging-terminal voltage Voa, and outputs a switching signal SW2 to turn on and off switching elements 69, 71, 73, and 75 of inverter 57. Control circuit 63 further outputs a main relay signal Rt2 to turn on and off main relay 58. Control circuit 63 further outputs an auxiliary relay signal R2 to turn on and off auxiliary relay 81. Control circuit 63 outputs a control signal CNT2 to control DC-DC converter 55, and receives from DC-DC converter 55 the control signal CNT2 as the secondary-battery voltage Vba, which is the voltage of secondary battery 53.

Control circuit 63 is electrically connected to antenna 83 via which control circuit 63 can wirelessly communicate with, for example, control circuit 23 of charge-discharge device 11. This configuration allows control circuit 63 to wirelessly send control circuit 23 a data signal DAT2 and to wirelessly receive the data signal DAT1 from control circuit 23.

Charge-discharge devices 11 and 51 can charge secondary battery 13 with the power stored in secondary battery 53 when secondary battery 13 is running out of power, and can charge secondary battery 53 with the power stored in secondary battery 13 when secondary battery 53 is running out of power. This operation is referred to as "power interchange" in which charge-discharge devices 11 and 51 interchange electric power with each other. Charge-discharge device 51 operates similarly to charge-discharge device 11 except for the power interchange with charge-discharge device 11.

An operation of charge-discharge devices 11 and 51 for supplying power from charge-discharge device 51 to charge-discharge device 11 will be described below.

First, as shown in FIG. 2, a user connects outlet cable 85 between auxiliary charging terminal 79 and main charging terminal 19. At this stage, DC-DC converter 15 is stopped state since the power interchange does not start.

Outlet cable 85 includes a connector having a shape engaged with auxiliary charging terminal 39, and a connector having a shape engaged with main charging terminal 19. These connectors have, for example, projections thereon to be prevented from being connected in reverse polarity. These vehicles interchange power by not rapid charge but normal charge, so that outlet cable 85 may not necessarily be thick as required for rapid charge. As a result, outlet cable 85 can be light-weight, preventing a vehicle having outlet cable 85 from running less efficiently than a heavy cable.

Next, the user operates a switch of charge-discharge device 11 to start receiving electric power from the other vehicle. The switch is connected to control circuit 23. Control circuit 23 turns off all of switching elements 29, 31, 33, and 35, and then, sends charge-discharge device 51 the data signal DAT1 so as to turn on auxiliary relay 81. Upon receiving the data signal DAT1, control circuit 63 turns on auxiliary relay 81. As a result, the secondary-battery voltage Vba (DC voltage) of secondary battery 53 is applied to inverter 17.

Next, as shown in FIG. 2, control circuit 23 turns on switching elements 29 and 35, while continue turning off switching elements 31 and 33. As a result, inverter 17 outputs the secondary-battery voltage Vba substantially intactly, so that the voltage Vba may be applied between ports 15C and 15D of DC-DC converter 15. The phrase "inverter 17 outputs the secondary-battery voltage Vba (DC voltage) substantially intactly" means that the DC voltage input to inverter 17 is output intactly within the range of voltage drop due to the internal resistance of inverter 17.

Next, control circuit 23 causes DC-DC converter 15 to convert the secondary-battery voltage Vba applied to DC-DC converter 15 into a voltage suitable for charging secondary battery 13 and output the converted voltage. As a result, the vehicles (charge-discharge devices 11 and 51) perform power interchange to charge secondary battery 13 with the power stored in secondary battery 53. At this moment, as shown in FIG. 2, outlet cable 85 carries the power from auxiliary charging terminal 79 of charge-discharge device 51 to main charging terminal 19 of charge-discharge device 11.

During the power interchange, control circuits 23 and 63 monitor states of charge SOC1 and SOC2 of batteries 13 and 53, respectively. At this moment, control circuit 23 receives the state of charge SOC2 of secondary battery 53 monitored by control circuit 63. When the required power interchange is completed, control circuit 23 determines the completion of charging of secondary battery 13 according to the states of charge SOC1 and SOC2.

According to Embodiment 1, the state of charge SOC1 of secondary battery 13 is the ratio of the amount of power that is currently stored and available in secondary battery 13 to the total amount (capacity) of power that can be stored in secondary battery 13. The ratio is expressed in percentage. Control circuit 23 calculates the state of charge SOC1 by time-integrating the charge-discharge current of secondary battery 13. Similarly, control circuit 63 calculates the state of charge SOC2 of secondary battery 53.

Control circuit 23 can determine the completion of charging depending on one of the following conditions (1) to (3).

Condition (1): The user determines a power interchange amount which is an amount of power to be supplied from secondary battery 53 (charge-discharge device 51) to secondary battery 13 (charge-discharge device 11), and secondary battery 13 is charged by the amount of power interchange.

Condition (2): Control circuit 63 determines an amount of power (including a margin) required for the other vehicle to run from a current location to a destination. The amount of power calculated by subtracting the determined amount of power from the power currently stored in secondary battery 53 is supplied to charge-discharge device 11 (secondary battery 13).

Condition (3): Control circuit 23 determines an amount of power (including a margin) required for the vehicle to run from the current location to the destination, and the determined amount of power is supplied to secondary battery 13 from secondary battery 53 storing a sufficient amount of power therein.

Control circuit 23 may determine the completion of the charging of the secondary battery depending on conditions other than the above conditions (1) to (3).

When terminating charging of the secondary battery, charge-discharge devices 11 and 51 operate as follows. Control circuit 23 receives the state of charge SOC1 of secondary battery 13, and receives the state of charge SOC2 of secondary battery 53 through the communication with control circuit 63. Control circuit 23 determines, based on the states of charge SOC1 and SOC2, whether or not the charging of secondary battery 13 is completed. This operation prevents secondary battery 13 from being overcharged, prevents secondary battery 53 from being over discharged, and prevents power interchange from being performed more than necessary.

Control circuit 23 determines the completion of that charging based on the states of charge SOC1 and SOC2 according to Embodiment 1, but this is not the only option available. For example, when the states of charge SOC1 and SOC2 are proportional to the secondary-battery voltages Vb and Vba, respectively, control circuit 23 may determine the completion of charging based on the secondary-battery voltages Vb and Vba.

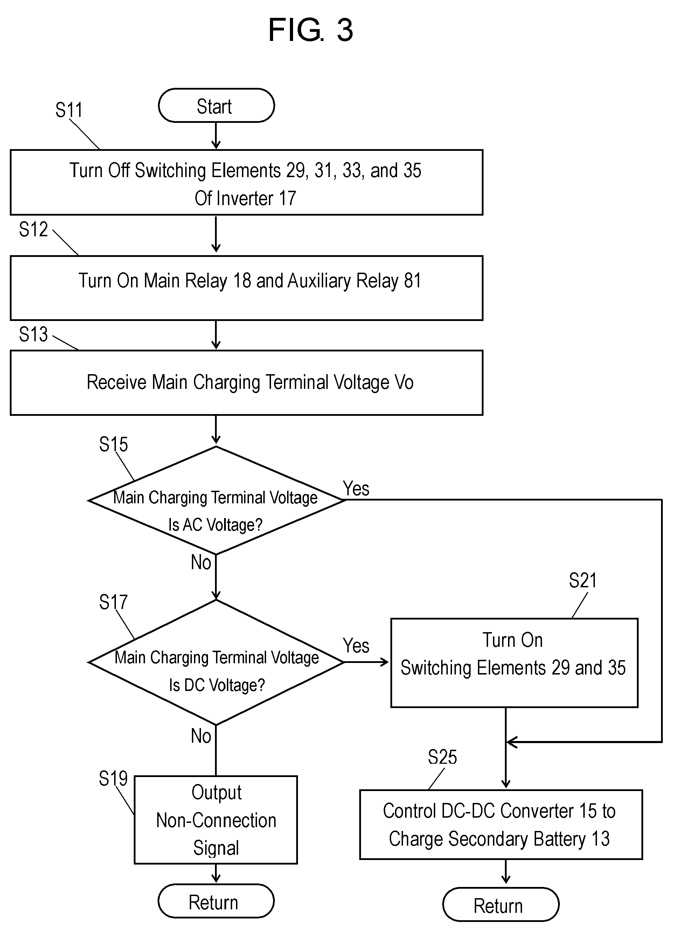

An overall operation of charge-discharge device 11 will be described below. FIG. 3 is a flowchart showing the operation of charge-discharge device 11. In the operation shown in FIG. 3, in the case of performing power interchange, a main switch or an ignition switch of each vehicle is turned on. In addition, a user sets both vehicles to a power interchange mode in which batteries 13 and 53 (charge-discharge devices 11 and 51) interchange electric power with each other.

Upon receiving an instruction from the user to start charging secondary battery 13, control circuit 23 executes the operation shown in the flowchart of FIG. 3. The flowchart of FIG. 3 is a subroutine called from a main routine of the microcomputer in control circuit 23.

The subroutine shown in the flowchart of FIG. 3 is executed as follows. First, control circuit 23 turns off all of switching elements 29, 31, 33, and 35 of inverter 17 (Step S11).

Next, control circuit 23 turns on main relay 18, and instructs control circuit 63 of charge-discharge device 51 to turn on auxiliary relay 81 (Step S12). More specifically, control circuit 23 sends, to main relay 18, the main relay signal Rt1 to turn on main relay 18, and sends, to charge-discharge device 51, the data signal DAT1 to turn on auxiliary relay 81. In the power interchange mode, main relay 18 and auxiliary relay 81 are turned on, and the secondary-battery voltage Vba of secondary battery 53 is supplied to inverter 17. On the other hand, in a mode other than the power interchange mode, there is no other vehicle to perform power interchange with. Therefore, control circuit 63 of charge-discharge device 51 ignores the data signal DAT1 received at Step S12 and performs nothing.

Next, control circuit 23 receives the main charging-terminal voltage Vo from voltage detector 21 (Step S13), and determines whether the voltage Vo is an AC voltage or not (Step S15). If it is determined that the voltage Vo is an AC voltage in Step S15 (Yes in Step S15), control circuit 23 performs operations at step from Step S25 described later in order to charge secondary battery 13 with the commercial AC power supply 25. At this moment, if having an AC voltage of a value or frequency different from commercial AC power supply 25 used to charge secondary battery 13 supplied thereto, control circuit 23 may regard the supplied voltage as irregular power and output a warning to the user. In the operation shown in FIG. 3, control circuit 23 causes -DC converter 15 to charge secondary battery 13 regardless of fluctuations in the AC voltage or frequency of AC power supply 25.

If it is determined that the main charging-terminal voltage Vo is not an AC voltage at Step S15 ("No" at Step S15), control circuit 23 determines whether the voltage Vo is a DC voltage or not (Step S17). If it is determined that the voltage Vo is a DC voltage at Step S17 ("Yes" at Step S17), control circuit 23 performs operations at steps from Step S21 described later.

If it is determined that the charging-terminal voltage Vo is not a DC voltage at Step S17 ("No" at Step S17), this situation means that neither an AC voltage nor a DC voltage is supplied to main charging terminal 19. Hence, control circuit 23 determines that main charging terminal 19 is not connected to outlet cable 85, and outputs a non-connection signal to the user (Step S19). As a result, the subroutine shown in FIG. 3 is terminated and the process is returned to the main routine. This operation allows the user to confirm the connection and to perform charging again.

If it is determined that the main charging-terminal voltage Vo is a DC voltage at Step S17 ("Yes" at Step S17), control circuit 23 turns on switching elements 29 and 35 while continuing to turn off switching elements 31 and 33 (Step S21). Consequently, inverter 17 outputs the charging-terminal voltage Vo substantially intactly. As a result, the charging-terminal voltage Vo is supplied to ports 15C and 15D of DC-DC converter 15, and control circuit 23 causes DC-DC converter 15 to charge secondary battery 13 (Step S25). Thus, secondary battery 13 is charged with the DC power supplied through main charging terminal 19. The DC power supply to be connected to main charging terminal 19 may be, for example, secondary battery 53 shown in FIG. 2, a solar-powered DC power supply, or a DC power supply from a stationary power storage unit. In any case, control circuit 23 causes DC-DC converter 15 to charge secondary battery 13.

When AC power supply 25 is connected to main charging terminal 19 and it is determined that the main charging-terminal voltage Vo is an AC voltage at Step S15 ("Yes" at Step S15), control circuit 23 causes DC-DC converter 15 to charge secondary battery 13 at Step S25. In this case, the operation at Step S21 is not performed, and switching elements 29, 31, 33, and 35 continue to be turned off. Hence, parasitic diodes 29D, 31D, 33D, and 35D of switching elements 29, 31, 33, and 35 which are bridge-connected cause inverter 17 to function as a rectifying circuit. The AC power from AC power supply 25 is rectified by inverter 17, smoothed by smoothing capacitor 27, and supplied to ports 15C and 15D of DC-DC converter 15. Thus, secondary battery 13 can be charged with the AC power from AC power supply 25.

As described above, control circuit 23 automatically charges secondary battery 13 under optimum conditions with the subroutine of FIG. 3 regardless of whether main charging terminal 19 is connected to AC power supply 25, any of the above-mentioned DC power supplies, or secondary battery 53. This configuration allows the user to charge secondary battery 13 including power interchange easily.

As shown in the flowchart of FIG. 3, charge-discharge device 11 operates as follows. While secondary battery 13 is charged through main charging terminal 19, when the voltage Vo of main charging terminal 19 detected by voltage detector 21 is an AC voltage, control circuit 23 causes inverter 17 to function as a rectifying circuit, and then, causes DC-DC converter 15 to charge secondary battery 13. When the voltage Vo is a DC voltage, control circuit 23 causes inverter 17 to output the DC voltage substantially intactly, and then, causes DC-DC converter 15 to charge secondary battery 13. The charging of the battery is terminated as described above.

According to Embodiment 1, when the charging-terminal voltage Vo is an AC voltage, control circuit 23 causes inverter 17 to function as a rectifying circuit, but may alternatively cause inverter 17 to function as a power factor correction (PFC) circuit for the following reason. If the charging-terminal voltage Vo is converted to a DC voltage by the rectifying circuit, a pulsating voltage is supplied to smoothing capacitor 27. Reducing fluctuations in the pulsating voltage requires smoothing capacitor 27 to have a large capacitance, resultantly increasing the size of charge-discharge device 11.

According to Embodiment 1, however, control circuit 23 controls the switching of switching elements 29, 31, 33, and 35 so as to cause inverter 17 to function as a power factor correction circuit in cooperation with inductor 37L of filter circuit 37. This configuration does not increase the size of smoothing capacitor 27. Such an operation can be executed by software of control circuit 23 alone, without any additional circuits. This configuration stabilizes the voltage input to DC-DC converter 15 and reduces harmonics.

While DC-DC converter 15 charges secondary battery 13 according to Embodiment 1, pulsation may not seriously affect the charging and discharging of the secondary battery if secondary battery 13 has a large capacity. In this case, control circuit 23 may cause inverter 17 to function not as a power factor correction circuit, but as a rectifying circuit.

According to Embodiment 1, inverter 17 is controlled to output the DC voltage substantially intactly when the main charging-terminal voltage Vo is a DC voltage, but may alternatively be controlled to function as a DC voltage conversion circuit in cooperation with inductor 37L of filter circuit 37 for the following reason.

When secondary battery 13 is charged from a state in which the battery is discharged, the secondary-battery voltage Vb is low before the charging. Hence, DC-DC converter 15 charges secondary battery 13 by stepping down the voltage of smoothing capacitor 27, which is the voltage to be input to ports 15C and 15D. For this reason, the voltage of smoothing capacitor 27 is higher than the secondary-battery voltage Vb.

According to Embodiment 1, the full charge voltage (about 130 V) of the secondary-battery voltage Vb is close to the peak voltage (141 V) of AC power supply 25. Since the full charge voltage is slightly lower than the peak voltage, DC-DC converter 15 can charge secondary battery 13 to a full-charge state not by stepping up the voltage (about 141 V) of smoothing capacitor 27, but by stepping down the voltage (about 141 V) of smoothing capacitor 27.

Bidirectional DC-DC converter 15 can step down the DC voltage applied between ports 15C and 15D and outputs the stepped-down voltage between ports 15A and 15B, and on the other hand, can step up the DC voltage applied between ports 15A and 15B and outputs the stepped up voltage between ports 15C and 15D. However, the voltage difference between ports 15C and 15D and the voltage difference between ports 15A and 15B are determined by the circuit configuration of DC-DC converter 15, and cannot be easily changed by DC-DC converter 15 controlling the turning on and off of the switching elements. Thus, according to Embodiment 1, it is difficult for DC-DC converter 15 to step up the DC voltage applied between ports 15C and 15D to output the stepped-up voltage between ports 15A and 15B, and to step down the DC voltage applied between ports 15A and 15B to output the stepped-down voltage between ports 15C and 15D. Hence, if the full charge voltage is higher than the voltage (for example, 200 V) of smoothing capacitor 27, it is difficult to charge secondary battery 13 when the voltage of smoothing capacitor 27 is close to the secondary-battery voltage Vb. To avoid this situation, when the voltage of smoothing capacitor 27 is close to the secondary-battery voltage Vb, control circuit 23 repetitively turns on and off switching elements 29, 31, 33, and 35 to step up the voltage of smoothing capacitor 27. As a result, inverter 17 in cooperation with inductor 37L of filter circuit 37 can operate as a step-up DC-DC converter, which is a DC voltage conversion circuit. As a result, DC-DC converter 15 can continue to step down the voltage so as to charge secondary battery 13 to a full-charge state.

Thus, control circuit 23 may cause inverter 17 to function as a step-up converter depending on a situation on secondary battery 13.

As described above, when the voltage Vo of main charging terminal 19 is an AC voltage, control circuit 23 is operable to cause inverter 17 to function as either a rectifying circuit or a power factor correction circuit. When the voltage Vo is a DC voltage, control circuit 23 is operable to cause inverter 17 to output the DC voltage substantially intactly or to cause inverter 17 to function as a DC voltage conversion circuit.

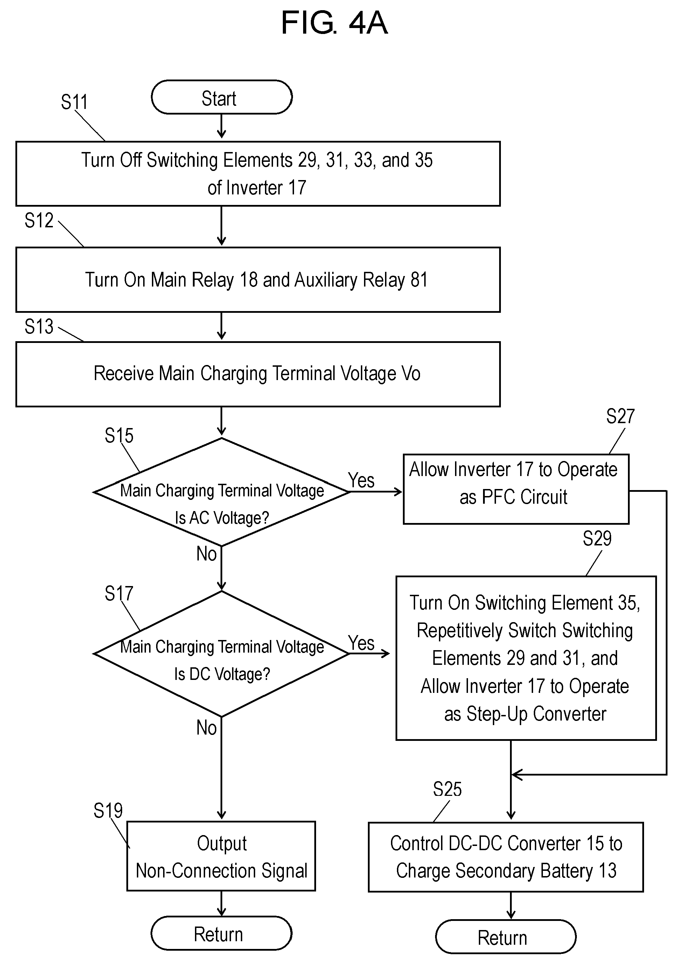

FIG. 4A is a flowchart showing the above-described operation of charge-discharge device 11. The flowchart shown in FIG. 4A is a subroutine called from the main routine, similarly to the flowchart shown in FIG. 3. In FIG. 4A, items identical to those of the flowchart shown in FIG. 3 are denoted by the same reference numerals.

In the subroutine shown in FIG. 4A, control circuit 23 performs the operations at Steps S11 to S15 which are identical to those in the flowchart shown in FIG. 3.

If it is determined that the main charging-terminal voltage Vo is an AC voltage at Step S15 ("Yes" at Step S15), control circuit 23 causes inverter 17 to function as a power factor correction circuit (Step S27). More specifically, at Step S27, control circuit 23 repetitively turns on and off switching elements 29, 31, 33, and 35 of inverter 17 as described above, thereby causing inverter 17 to function as a power factor correction circuit in cooperation with inductor 37L of filter circuit 37. Control circuit 23 then performs the operation at Step S25, similarly to the flowchart shown in FIG. 3.

If it is determined that the main charging-terminal voltage Vo is not an AC voltage at Step S15 ("No" at Step S15), control circuit 23 determines whether the voltage Vo is a DC voltage or not (Step S17).

If it is determined that the voltage Vo is a DC voltage at Step S17 ("Yes" at Step S17), control circuit 23 alternately turns on and off switching elements 29 and 31 at a predetermined frequency while continuing turning off switching element 33 and continuing turning on switching element 35 (Step S29). As a result, inverter 17 in cooperation with inductor 37L of filter circuit 37 functions as a DC voltage conversion circuit for stepping up the charging-terminal voltage Vo and applying the stepped-up voltage across smoothing capacitor 27, that is, between ports 15C and 15D of DC-DC converter 15. This operation allows the voltage of smoothing capacitor 27 to be suitable to be input to DC-DC converter 15. Control circuit 23 then performs the operation, similarly to the flowchart shown in FIG. 3.

If it is determined that the charging-terminal voltage Vo is not a DC voltage at Step S17 ("No" at Step S17), control circuit 23 performs the operation at Step S19, similarly to the flowchart shown in FIG. 3.

By the operations shown in FIG. 4A, the voltage to be input to DC-DC converter 15 can be stabilized without increasing the size of smoothing capacitor 27 nor adding circuits. If the full charge voltage of secondary battery 13 is higher than the voltage of smoothing capacitor 27, control circuit 23 causes inverter 17 to function as a DC voltage conversion circuit (step-up converter). This operation allows charge-discharge device 11 to charge and discharge secondary battery 13 with a different full charge voltage.

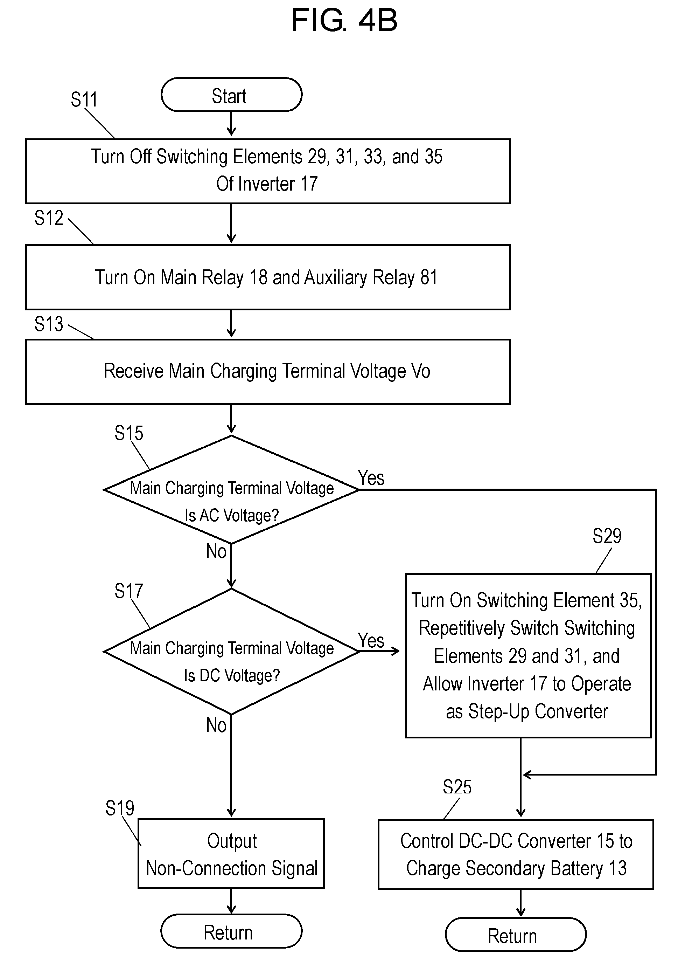

FIG. 4B is a flowchart showing still another operation of charge-discharge device 11. In FIG. 4B, items identical to those of the flowcharts shown in FIGs. 3 and 4A are denoted by the same reference numerals. In the operation shown in FIG. 4B, control circuit 23 does not perform the operations at Step S27 shown in FIG. 4A, and instead, causes inverter 17 to function as a rectifying circuit as shown in FIG. 3.

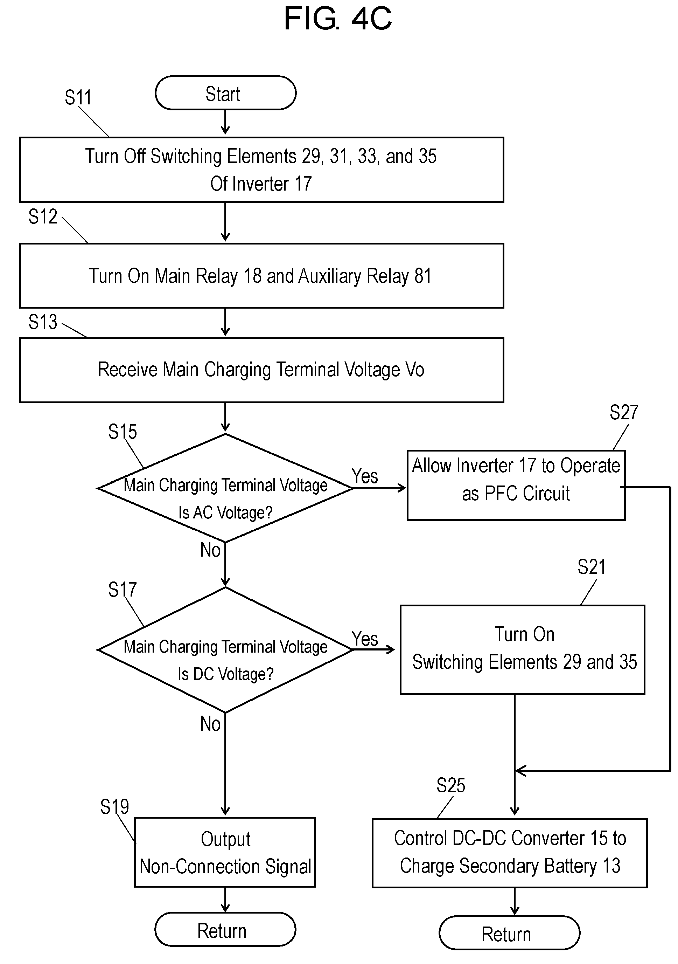

FIG. 4C is a flowchart showing a further operation of charge-discharge device 11. In FIG. 4C, items identical to those of the flowcharts of FIGs. 3 and 4A are denoted by the same reference numerals. In FIG. 4C, control circuit 23 may perform the operation at Step S27 shown in FIG. 4A, and may also perform the operation at Step S21 shown in FIG. 3 instead of the operation at Step S29 shown in FIG. 4A.

The above-described construction and operation allows the circuit for charging secondary battery 13 with commercial AC power supply 25 to use to receive DC power temporarily from another electric vehicle. The use of the circuit prevents a large current from flowing, and does not require thick outlet cable 85 to be thick. Furthermore, control circuit 23 can control the charging of secondary battery 13 from the other electric vehicle, not requiring a separate buck-boost circuit. As a result, charge-discharge device 11 allows the electric vehicles to interchange electric power with each other via simple, light-weight outlet cable 85. In the operation shown in FIGs. 3 and 4A to 4C, control circuits 23 and 63 activates only DC-DC converter 15 of charge-discharge device 11 without activating DC-DC converter 55 of charge-discharge device 51. Deactivating of one of DC-DC converters 15 and 55 reduces the power loss of secondary battery 53.

According to Embodiment 1, secondary battery 13 is charged with secondary battery 53. In contrast, while secondary battery 53 is charged with secondary battery 13, outlet cable 85 is connected between auxiliary charging terminal 39 of charge-discharge device 11 and main charging terminal 59 of charge-discharge device 51, and control circuit 63 performs one of the operations shown in FIGs. 3 and 4A to 4C.

According to Embodiment 1, while secondary battery 13 is charged with the power stored in secondary battery 53, inverter 17 is controlled to output the secondary-battery voltage Vba (DC voltage) of secondary battery 53 substantially intactly. In this case, control circuit 23 turns on switching elements 29 and 35 at Step 21, but may alternatively turn on only switching element 35 and continue turning off switching elements 29, 31, and 33 at Step S21. Even if switching element 29 is turned off, the DC voltage is supplied to DC-DC converter 15 via parasitic diode 29D. Although this operation does not require to control switching element 29, parasitic diode 29D produces a certain amount of loss. To avoid this loss, both of switching elements 29 and 35 are preferably turned on at Step S21 shown in FIG. 3.

According to Embodiment 1, while secondary battery 13 is charged with the power stored in secondary battery 53, outlet cable 85 is connected between main charging terminal 19 of charge-discharge device 11 and auxiliary charging terminal 79 of charge-discharge device 51. Alternatively, outlet cable 85 may be connected between main charging terminal 19 of charge-discharge device 11 and main charging terminal 59 of charge-discharge device 51. This configuration allows an electric vehicle not having auxiliary charging terminal 39 to perform power interchange.

In this case, however, it is necessary to activate both of DC-DC converters 15 and 55 since both of the converters are of isolated type. This configuration increases a loss caused by power interchange. To avoid the loss increase, in the case that charge-discharge device 11 includes auxiliary charging terminal 39, outlet cable 85 is connected preferably between main charging terminal 19 of device 11 and auxiliary charging terminal 79 of device 51, and control circuits 23 and 63 preferably activate only DC-DC converter 15 without activating DC-DC converter 55. For this reason, device 11 further includes auxiliary charging terminal 39 which is configured to be electrically connected to secondary battery 13 via auxiliary relay 41. Charge-discharge device 51 includes auxiliary charging terminal 79 which is configured to be electrically connected to secondary battery 53 via auxiliary relay 81. Auxiliary relay 41 is turned on and off by control circuit 23. When secondary battery 13 is charged with the power of secondary battery 53, auxiliary charging terminal 79 is connected to main charging terminal 19 via outlet cable 85, and auxiliary relay 81 is turned on. Control circuit 23 then causes DC-DC converter 15 to charge secondary battery 13.

In the case that auxiliary charging terminal 39 is available, auxiliary relay 41 is connected between secondary battery 13 and auxiliary charging terminal 39 so as to prevent the high secondary-battery voltage Vb from being constantly applied to auxiliary charging terminal 39.

According to Embodiment 1, control circuit 23 communicates with control circuit 63 to turn on and off auxiliary relay 81, but this communication may not necessarily be necessary. In the case that the communication is not performed, the user may turn on and off auxiliary relays 41 and 81 to start and terminate the charging in the power interchange between the vehicles. However, the user's operation may cause overcharge or over discharge and is complex. Therefore, charge-discharge devices 11 and 51 may preferably control each other through communication according to Embodiment 1.

### Exemplary Embodiment 2

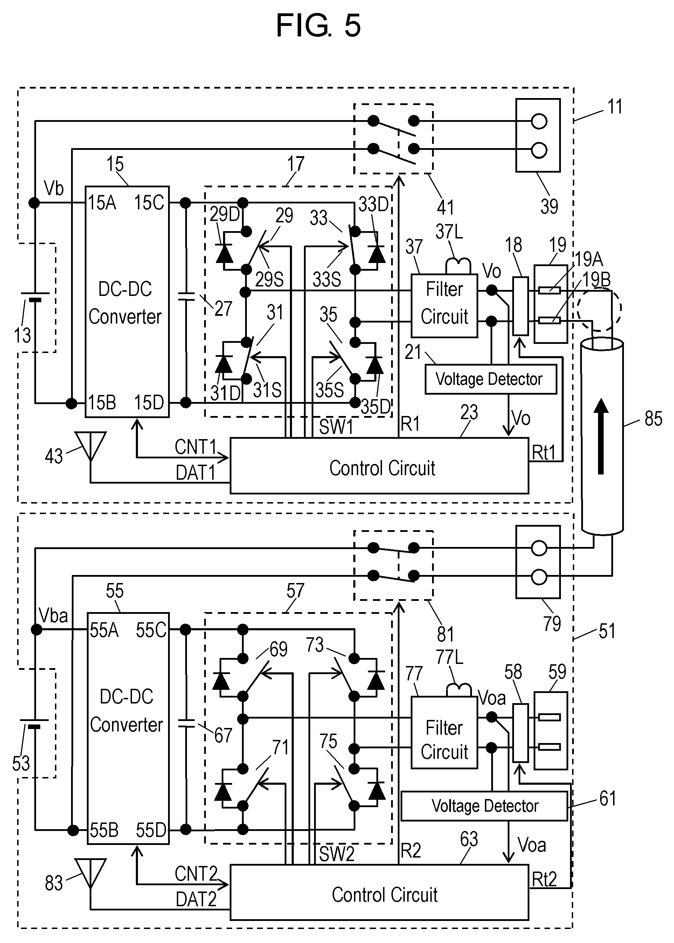

FIG. 5 is a block circuit diagram of charge-discharge devices 11 and 51 according to Exemplary Embodiment 2 while charging DC power. In FIG. 5, components identical to those of charge-discharge devices 11 and 51 shown in FIGs. 1 and 2 are denoted by the same reference numerals.

Voltage detector 21 of charge-discharge device 11 according to Embodiment 2 detects and outputs the polarity of the main charging-terminal voltage Vo when the main charging-terminal voltage Vo is a DC voltage. Control circuit 23 causes inverter 17 to supply an appropriate voltage to DC-DC converter 15 depending on the polarity of the DC voltage. This operation does not require detecting the polarity at outlet cable 85, eliminating the need to provide a rib on the connector of outlet cable 85 to prevent reverse connection. As a result, the electric vehicles can perform power interchange via simple outlet cable 85.

A configuration of charge-discharge device 11 according to Embodiment 2 will be detailed below. In charge-discharge device 11 according to Embodiment 2, when the main charging-terminal voltage Vo is a DC voltage, voltage detector 21 outputs not only the value of the DC voltage but also the polarity of the DC voltage. Thus, when the voltage Vo is an AC voltage, voltage detector 21 according to Embodiment 2 can output the voltage valve (the effective value according to Embodiment 2). When the voltage Vo is a DC voltage, voltage detector 21 outputs the voltage value including its polarity.

An operation of charge-discharge devices 11 and 51 to charge secondary battery 13 with power stored in secondary battery 53 of charge-discharge device 51 will be described below.

The user connects auxiliary charging terminal 79 of charge-discharge device 51 with main charging terminal 19 via outlet cable 85 as dented by the dotted-line circle shown in FIG. 5. More specifically, a positive electrode of auxiliary charging terminal 79 is connected to contact 19B which is a negative electrode of main charging terminal 19, whereas a negative electrode of auxiliary charging terminal 79 is connected to contact 19A which is a positive electrode of main charging terminal 19. In contrast, in the circuit shown in FIG. 2, the positive electrode of auxiliary charging terminal 79 is connected to contact 19A which is a positive electrode of main charging terminal 19, whereas the negative electrode of auxiliary charging terminal 79 is connected to contact 19B which is a negative electrode of main charging terminal 19. Thus, outlet cable 85 is inserted to main charging terminal 19 in the circuit shown in FIG. 5 in the direction opposite to the circuit shown in FIG. 2. The main charging-terminal voltage Vo is defined as a positive voltage when contact 19A has a higher potential than contact 19B, and is defined as a negative voltage when contact 19A has a lower potential than contact 19B.

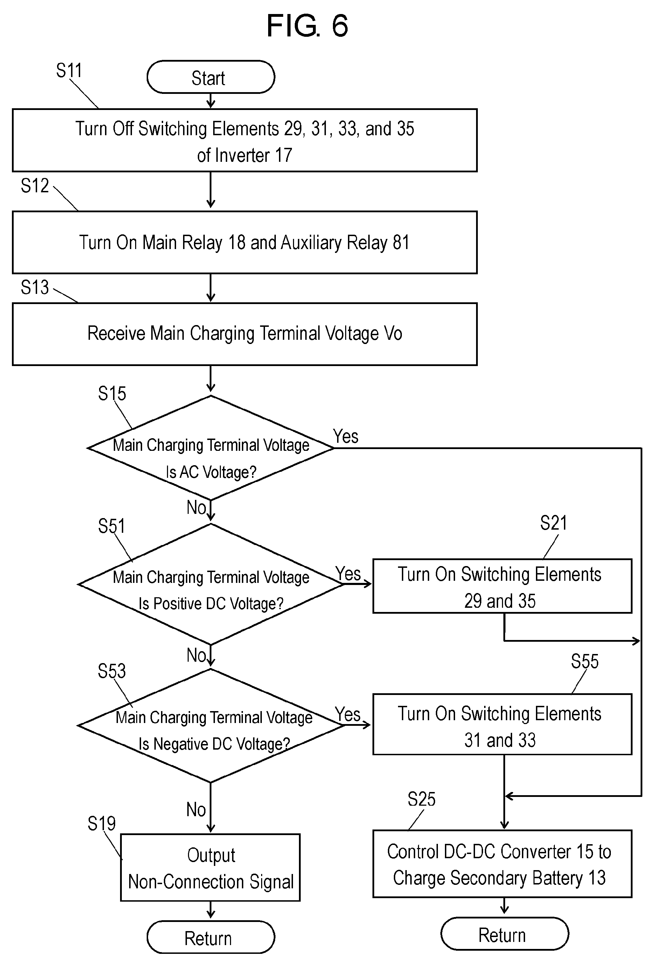

FIG. 6 is a flowchart showing the operation of charge-discharge device 11 to charge secondary battery 13 with secondary battery 53 in this situation. In FIG. 6, items identical to those of the flowchart shown in FIGs. 3 and 4A to 4C are denoted bye the same reference numerals. The flowchart shown in FIG. 6 is a subroutine called from the main routine, similarly to Embodiment 1.

In the subroutine shown in FIG. 6, control circuit 23 performs the operations at Steps S11 to S15 which are identical to those in the flowchart shown in FIG. 3. If it is determined that the charging-terminal voltage Vo is an AC voltage at Step S15 ("Yes" at Step S15), control circuit 23 performs the operation at Step S25 similarly to the flowchart shown in FIG. 3.

If it is determined that the charging-terminal voltage Vo is not an AC voltage at Step S15 ("No" at Step S15), control circuit 23 determines whether the voltage Vo is a positive DC voltage or not (Step S51). If it is determined that the voltage Vo is a positive DC voltage ("Yes" at Step S51), charge-discharge device 11 performs operation at Steps S21 and S25 similarly to the flowchart shown in FIG. 3.

If it is determined that the charging-terminal voltage Vo is not a positive DC voltage at Step S51 ("No" at Step S51), control circuit 23 determines whether the voltage Vo is a negative DC voltage or not (Step S53). If it is determined that the voltage Vo is a negative DC voltage at Step S53 ("Yes" at Step S53), control circuit 23 turns on switching elements 31 and 33 while continuing turning off switching elements 29 and 35 (Step S55).

At Step S55, switching elements 29, 31, 33, and 35 of inverter 17 are turned on or off as shown in FIG. 5. In FIG. 5, outlet cable 85 is inserted to main charging terminal 19 in the direction opposite to the circuit shown in FIG. 3. The positive electrode of secondary battery 53 is connected to contact 19B which is the negative electrode of main charging terminal 19. However, switching element 33 is turned on and switching element 35 turned off, thereby allowing contact 19B of main charging terminal 19 to be properly connected to ports 15C of DC-DC converter 15.

Similarly, outlet cable 85 is inserted to main charging terminal 19 in the direction opposite to the circuit shown in FIG. 3. The negative electrode of secondary battery 53 is connected to contact 19A which is the positive electrode of main charging terminal 19. However, switching element 31 is turned on and switching element 29 is turned off, thereby allowing contact 19A of main charging terminal 19 to be properly connected to negative port 15D of DC-DC converter 15.

Thus, through the operations at Steps S21 and S51 to S55 shown in FIG. 6, control circuit 23 causes inverter 17 to supply an appropriate voltage to DC-DC converter 15 depending on the polarity of the main charging-terminal voltage Vo. As a result, power interchange is performed correctly even if the user inserts outlet cable 85 to main charging terminal 19 in a reverse direction. This configuration does not require outlet cable 85 to include a component to detect the polarity, allowing outlet cable 85 to have a simpler structure than that according to Embodiment 1.

In FIG. 6, if it is determined that the charging-terminal voltage Vo is not a negative DC voltage at Step S53 ("No" at Step S53), the voltage Vo is neither an AC voltage nor a DC voltage. Therefore, control circuit 23 determines that main charging terminal 19 is not connected to outlet cable 85, and performs the operation at Step S19 similarly to the flowchart shown in FIG. 3.

According to Embodiment 2, when the main charging-terminal voltage Vo is an AC voltage, control circuit 23 causes inverter 17 to function as a rectifying circuit. Similarly to Embodiment 1, control circuit 23 may cause inverter 17 to function as a power factor correction circuit which can reduce pulsation or pulsating flow.

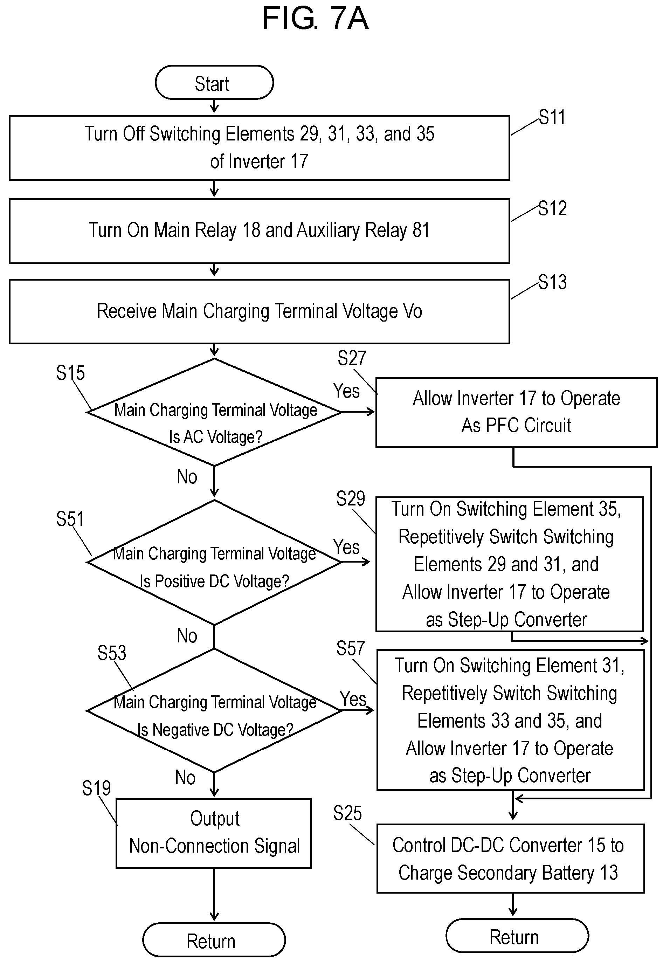

FIG. 7A is a flowchart showing another operation of charge-discharge devices 11 and 53 according to Embodiment 2. In FIG. 7A, items identical to those of the flowchart of FIG. 6 are denoted by the same reference numerals.

If it is determined that the main charging-terminal voltage Vo is an AC voltage at Step S15 ("Yes" at Step S15), control circuit 23 causes inverter 17 to function as a power factor correction circuit (Step S27) similarly to the operation at Step S27 shown in FIG. 4A. Control circuit 23 then performs the operation at Step S25.

According to Embodiment 2, if it is determined that the main charging-terminal voltage Vo is a DC voltage, inverter 17 may function as a DC voltage conversion circuit. If it is determined that the main charging-terminal voltage Vo is not an AC voltage at Step S15 ("No" at Step S15), control circuit 23 determines whether the main charging-terminal voltage Vo is a positive DC voltage or not (Step S51).

If it is determined that the voltage Vo is a positive DC voltage at Step S51 ("Yes" at Step S51), control circuit 23 alternately turns on and off switching elements 29 and 31 at a predetermined frequency while continuing turning off switching element 33 and continuing turning on switching element 35 (Step S29). As a result, inverter 17 in cooperation with inductor 37L of filter circuit 37 functions as a DC voltage conversion circuit for stepping up the charging-terminal voltage Vo and applying the stepped-up voltage across smoothing capacitor 27, that is, between ports 15C and 15D of DC-DC converter 15. Control circuit 23 then performs the operation at Step S25.

If it is determined that the charging-terminal voltage Vo is not a positive DC voltage at Step S51 ("No" at Step S51), control circuit 23 determines whether the voltage Vo is a negative DC voltage or not (Step S53).

If it is determined that the charging-terminal voltage Vo is a negative DC voltage at Step S53 ("Yes" at Step S53), control circuit 23 alternately turns on and off switching elements 33 and 35 at a predetermined frequency while continuing turning off switching element 29 and continuing turning on switching element 31 (Step S57). As a result, inverter 17 in cooperation with inductor 37L of filter circuit 37 functions as a DC voltage conversion circuit for stepping up the charging-terminal voltage Vo and applying the stepped-up voltage across smoothing capacitor 27, that is, between ports 15C and 15D of DC-DC converter 15. Control circuit 23 then performs operations at Step S25 and the subsequent steps.

If it is determined that the charging-terminal voltage Vo is not a negative DC voltage at Step S53 ("No" at Step S53), control circuit 23 performs the operation at Step S19.

The above-described construction and operation does not require detecting the polarity at outlet cable 85, eliminating the need to provide a rib on the connector of outlet cable 85 to prevent reverse connection. As a result, charge-discharge device 11 allows electric vehicles to interchange electric power with each other via outlet cable 85 having a simple structure.

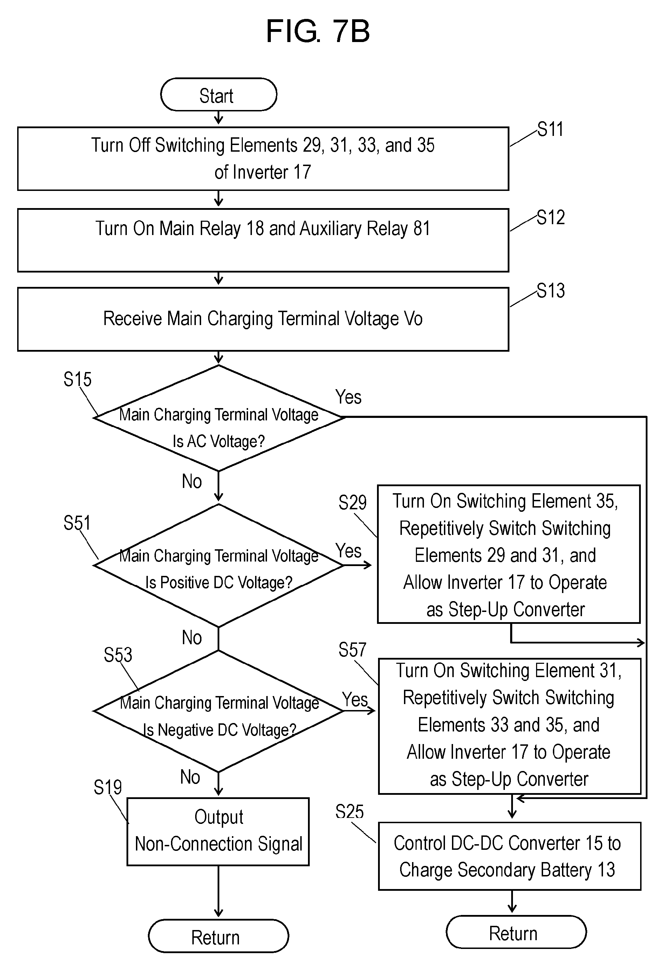

FIG. 7B is a flowchart showing a further operation of charge-discharge device 11 according to Embodiment 2. In FIG. 7B, items identical to those of the flowchart of FIGs. 6 and 7A are denoted by the same reference numerals. In the operation shown in FIG. 7B, control circuit 23 does not perform the operation at Step S27 shown in FIG. 7A, and instead, causes inverter 17 to function as a rectifying circuit similarly to the operation shown in FIG. 6.

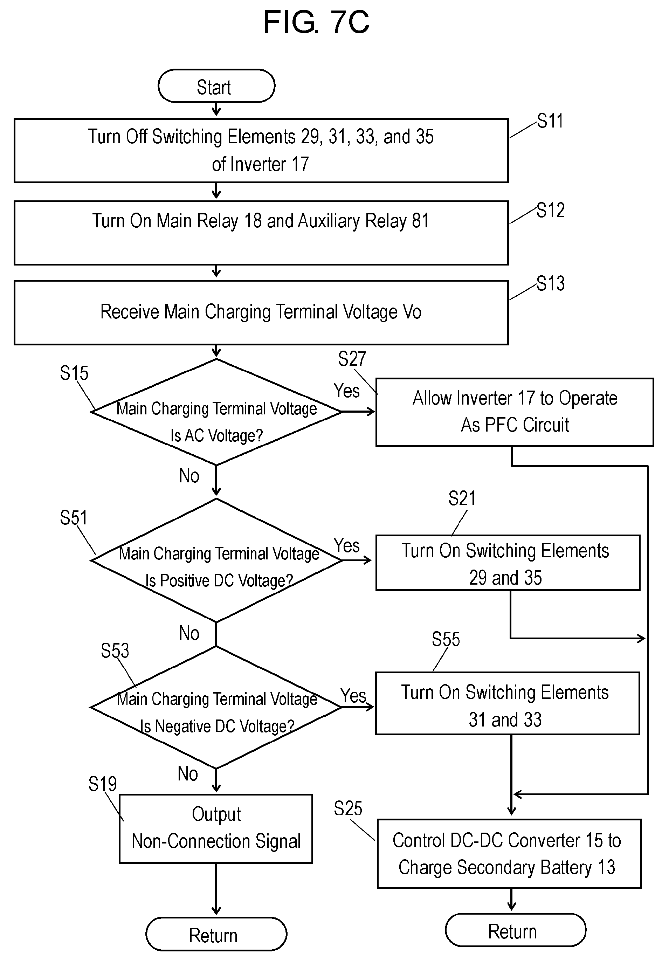

FIG. 7C is a flowchart showing a further operation of charge-discharge device 11 according to Embodiment 2. In FIG. 7C, identical to those of the flowchart shown in FIGs. 6 and 7A are denoted by the same reference numerals. In the operation shown in FIG. 7C, control circuit 23 performs the operation at Step S27 as shown in FIG. 7A, and performs the operations at Steps S21 and S55 as shown in FIG. 6 instead of the operations at Steps S29 and S57 shown in FIG. 7A, respectively.

### Exemplary Embodiment 3

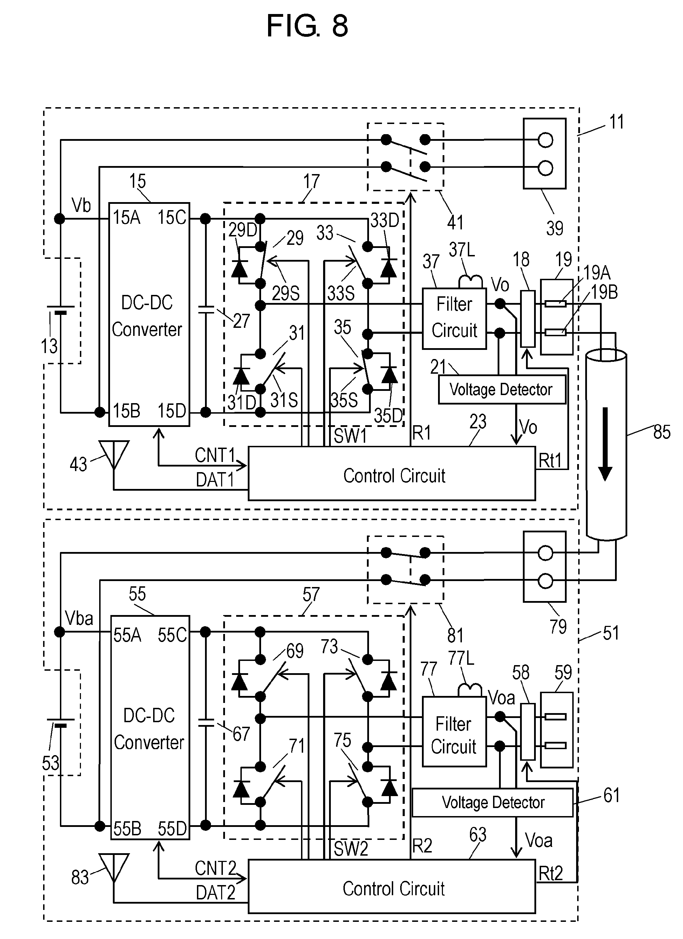

FIG. 8 is a block circuit diagram of charge-discharge device 11 according to Exemplary Embodiment 3 of the present invention while charging DC power. In FIG. 8, components identical to those of charge-discharge devices 11 and 51 shown in FIGs. 1 and 2 are denoted by the same reference numerals.

Control circuits 23 and 63 of charge-discharge devices 11 and 51 according to Embodiment 3 receive states of charge SOC1 and SOC2 of batteries 13 and 53, respectively. Control circuit 23 receives the state of charge SOC2 of secondary battery 53 by communicating with control circuit 63. When the state of charge SOC1 is larger than the state of charge SOC2, control circuit 23 causes DC-DC converter 15 to charge secondary battery 53.

This configuration reduces a risk of further discharging secondary battery 53 with the smaller state of charge SOC2, that is, with the smaller remaining amount of power, so that secondary battery 53 which needs power interchange can be correctly charged with secondary battery 13 with the larger state of charge SOC1. In addition, power interchange can be executed to supply power from the secondary battery with the larger remaining amount of power to the further battery with the smaller remaining amount of power regardless of the connecting direction of outlet cable 85.

Charge-discharge device 11 according to Embodiment 3 will be detailed below. In charge-discharge devices 11 and 51 shown in FIG. 8, the state of charge SOC1 of secondary battery 13 is larger than the state of charge SOC2 of secondary battery 53. In this case, as shown in FIG. 8, electric power is supplied from charge-discharge device 11 to charge-discharge device 51.

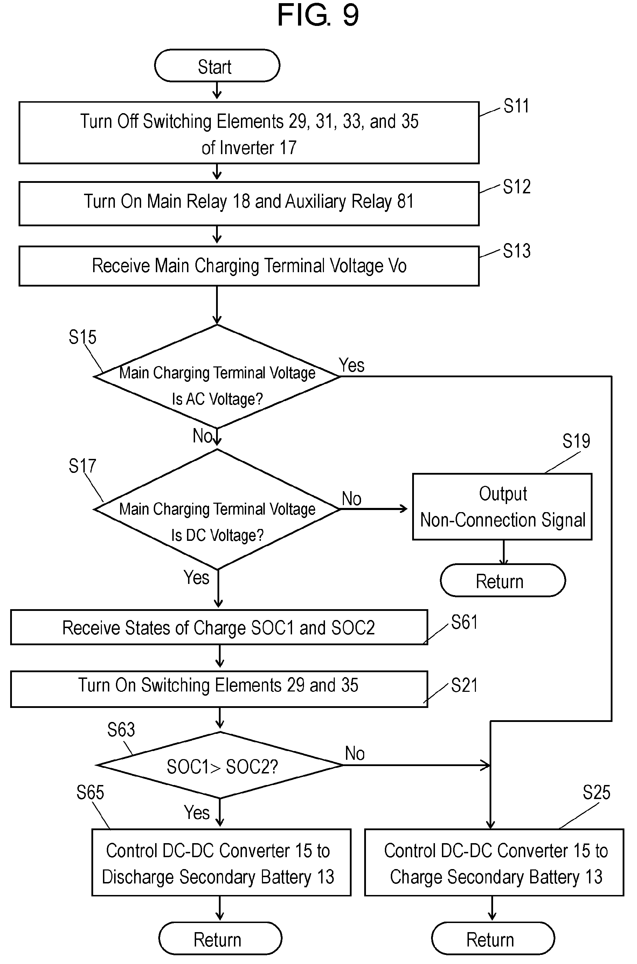

FIG. 9 is a flowchart showing the power interchange between charge-discharge devices 11 and 51 connected via outlet cable 85 shown in FIG. 8. In FIG. 9, items identical to those of the flowchart shown in FIG. 3 are denoted y the same reference numerals. The flowchart shown in FIG. 9 is a subroutine called from the main routine, similarly to the operation according to Embodiment 1.

In the subroutine shown in FIG. 9, control circuit 23 performs the operations at Steps S11 to S19 which are identical to those in the flowchart shown in FIG. 3. If it is determined that the charging-terminal voltage Vo is an AC voltage at Step S15 ("Yes" at Step S15), control circuit 23 performs the operation at Step S25, similarly to the flowchart of FIG. 3.

If it is determined that the charging-terminal voltage Vo is not an AC voltage at Step S15 ("No" at Step S15), control circuit 23 determines whether the voltage Vo is a DC voltage or not (Step S17). If it is determined that the voltage Vo is a DC voltage at Step S17 ("Yes" at Step S17), control circuit 23 receives the states of charge SOC1 and SOC2 (Step S61).

The states of charge SOC1 and SOC2 are determined as follows. DC-DC converters 15 and 55 include respective current sensors for detecting currents flowing to batteries 13 and 53. Control circuit 23 receives the output of the current sensor in DC-DC converter 15 as the control signal CNT1, and time-integrates the output, thereby regularly updating the state of charge SOC1. Similarly, control circuit 63 receives the output of the current sensor in DC-DC converter 55 as the control signal CNT2, and time-integrates the output, thereby regularly updating the state of charge SOC2.

At Step S61, control circuit 23 receives the state of charge SOC1. Control circuit 23 then sends, to control circuit 63, the data signal DAT1 requesting the state of charge SOC2 from control circuit 63. Upon receiving the data signal DAT1, control circuit 63 sends, to control circuit 23, the state of charge SOC2 as the data signal DAT2. Control circuit 13 receives the data signal DAT2 as the state of charge SOC2.

The states of charge SOC1 and SOC2 are determined by control circuits 23 and 63, respectively, but this is not the only option available. For example, in the case that DC-DC converter 15 includes a microcomputer, the state of charge SOC1 can be calculated by the microcomputer. This configuration requires plural microcomputers, but reduces the calculation load of control circuit 23 instead. Similarly, in the case that DC-DC converter 55 includes a microcomputer, the state of charge SOC2 can be calculated by the microcomputer.

Next, control circuit 23 turns on switching elements 29 and 35 while continuing turning off switching elements 31 and 33 (Step S21).

Next, control circuit 23 compares the state of charge SOC1 with the state of charge SOC2 (Step S63). When it is determined that the state of charge SOC1 is not larger than the state of charge SOC2 at Step S63 ("No" at Step S63), secondary battery 13 is charged with secondary battery 53 (Step S25).

When it is determined that the state of charge SOC1 is larger than the state of charge SOC2 at Step S63 ("Yes" at Step S63), control circuit 23 causes DC-DC converter 15 to supply the power stored in secondary battery 13 to secondary battery 53, that is, discharge secondary battery 13 (Step S65). This operation reduces a risk of further discharging secondary battery 53. At Step S65, the power in secondary battery 13 is supplied between ports 15A and 15B of DC-DC converter 15, whereas DC-DC converter 15 outputs electric power through ports 15C and 15D in order to charge secondary battery 53. The power output from DC-DC converter 15 is supplied to secondary battery 53 via switching elements 29 and 35 of inverter 17, filter circuit 37, main charging terminal 19, outlet cable 85, auxiliary charging terminal 79, and auxiliary relay 81, thereby charging secondary battery 53. This operation of DC-DC converter 15 is executed since DC-DC converter 15 is bidirectional. The subroutine shown in FIG. 9 is then terminated to return to the main routine.

At Step S65, the charge of secondary battery 53 is controlled not by control circuit 63 but by control circuit 23. This operation will be detailed below.

In order to control the charging of secondary battery 53 connected to charge-discharge device 51, control circuit 23 requires information, such as the secondary-battery voltage Vba of secondary battery 53, the state of charge SOC2, and the charging current flowing to secondary battery 53. Among them, the charging current flowing to secondary battery 53 is the same as the current flowing to DC-DC converter 15 within an error range, and is therefore detected by the current sensor in DC-DC converter 15. The secondary-battery voltage Vba is the same as the main charging-terminal voltage Vo within an error range, and can therefore be determined by voltage detector 21.

Control circuit 23 does not directly determine the state of charge SOC2 of secondary battery 53. First, control circuit 23 time-integrates the output of the current sensor using the latest state of charge SOC2 updated by control circuit 63, and then, updates the state of charge SOC2 regularly. Control circuit 23 sends the determined state of charge SOC2 to control circuit 63. Thus, control circuit 23 controls the charging of secondary battery 53 based on the state of charge SOC2.

The above operation may be also performed by the devices according to Embodiments 1 and 2. More specifically, according to Embodiment 1, the updating of the state of charge SOC2 during the discharging of secondary battery 53 is performed by the above-described operation.

According to Embodiment 3, the operation at Step S65 (the power supply from secondary battery 13 to secondary battery 53) increases the connection flexibility of outlet cable 85. More specifically, the power can be supplied from the one with a larger state of charge to the other with a smaller state of charge of batteries 13 and 53 by the user connecting auxiliary charging terminal 79 to main charging terminal 19 via outlet cable 85 without regard to the remaining amount of power of batteries 13 and 53. Detecting the polarity of the main charging-terminal voltage Vo before the operation at Step S21 as in Embodiment 2 can perform power interchange between batteries 13 and 53 more easily since it is not necessary to consider the direction of connecting the connector of outlet cable 85. More specifically, when the voltage Vo is a positive voltage, control circuit 23 operates as shown in FIG. 9. When the voltage Vo is a negative voltage, at Step S21, control circuit 23 turns on switching elements 31 and 33 while continuing turning off switching elements 29 and 35, instead of turning on switching elements 29 and 35 while continuing turning off switching elements 31 and 33. As a result, DC-DC converter 15 is connected at port 15C to the positive electrode of secondary battery 53, and is connected at port 15D to the negative electrode of secondary battery 53 regardless of the polarity of the voltage Vo.

In the case that outlet cable 85 is connected between main charging terminal 59 of charge-discharge device 51 and auxiliary charging terminal 39 of charge-discharge device 11, DC-DC converter 55 can charge and discharge secondary battery 53 by control circuit 63 performing the operation shown in FIG. 9, thereby increasing the connection flexibility of outlet cable 85.

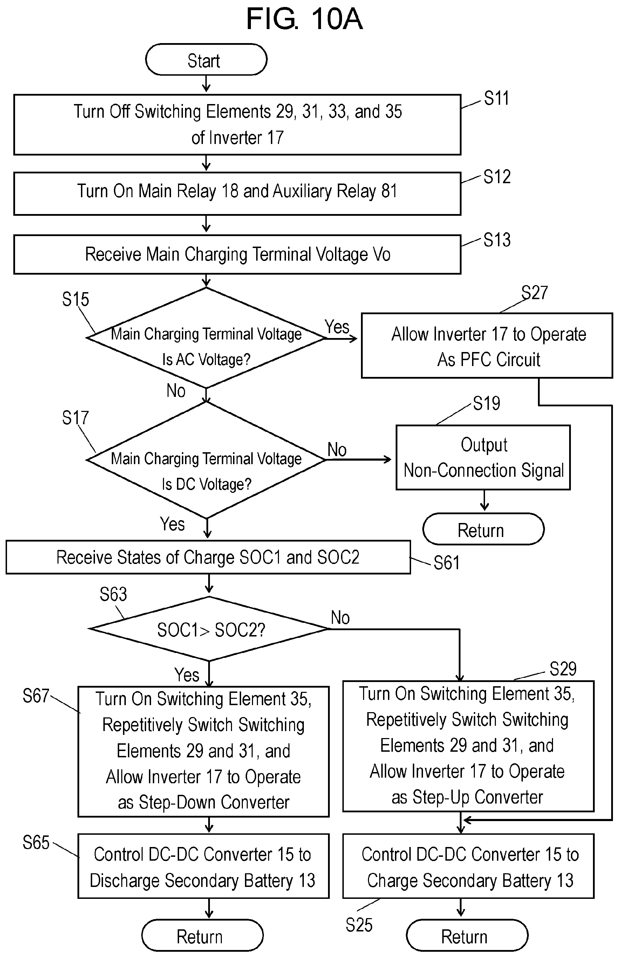

According to Embodiment 3, when the charging-terminal voltage Vo is an AC voltage, control circuit 23 causes inverter 17 to function as a rectifying circuit. Similarly to Embodiments 1 and 2, control circuit 23 may cause inverter 17 to function as a power factor correction circuit, thereby reducing pulsation or pulsating flow. FIG. 10A is a flowchart showing an operation of charge-discharge devices 11 and 51 according to Embodiment 3 to cause inverter 17 to function as a power factor correction circuit. In FIG. 10A, items identical to those of the flowchart shown in FIG. 9 are denoted by the same reference numerals.

If it is determined that the charging-terminal voltage Vo is an AC voltage at Step S15 ("Yes" at Step S15), control circuit 23 causes inverter 17 to functions as a power factor correction circuit (Step S27), similarly to the operation shown in FIG. 4A. Control circuit 23 then performs the operation at Step S25.

In the operation shown in FIG. 10A, when the charging-terminal voltage Vo is a DC voltage, control circuit 23 causes inverter 17 to function as a DC voltage conversion circuit.

If it is determined that the voltage Vo is not an AC voltage at Step S15 ("No" at Step S15), control circuit 23 performs the operations at Step S17, and Step S19 or S61, similarly to the operation shown in FIG. 9.

If it is determined that the voltage Vo is a DC voltage at Step S17 ("Yes" at Step S17), control circuit 23 performs the operation at Step S21 shown in FIG. 9. In the operation shown in FIG. 10A, control circuit 23 does not perform the operation Step S21 since control circuit 23 causes inverter 17 to function as a DC voltage conversion circuit while secondary battery 13 is charged or discharged.

Next, control circuit 23 compares the state of charge SOC1 with the state of charge SOC2 (Step S63). If it is determined that the state of charge SOC1 is not larger than the state of charge SOC2 at Step S63 ("No" at Step S63), similarly to the operation according to Embodiment 1, control circuit 23 alternately turns on and off switching elements 29 and 31 at a predetermined frequency while continuing turning off switching element 33 and continuing turning on switching element 35 (Step S29). As a result, inverter 17 in cooperation with inductor 37L of filter circuit 37 functions as a step-up converter which is a DC voltage conversion circuit for stepping up the charging-terminal voltage Vo and supplying the stepped-up voltage across smoothing capacitor 27, that is, between ports 15C and 15D of DC-DC converter 15. Control circuit 23 then allows secondary battery 13 to be charged with secondary battery 53 (Step S25).

If it is determined that the state of charge SOC1 is larger than the state of charge SOC2 at Step S63 ("Yes" at Step S63), control circuit 23 alternately turns on and off switching elements 29 and 31 at a predetermined frequency while continuing turning off switching element 33 and continuing turning on switching element 35 (Step S67). As a result, inverter 17 in cooperation with inductor 37L of filter circuit 37 functions as a step-down converter which is a DC voltage conversion circuit for stepping down the voltage across smoothing capacitor 27, that is, between ports 15C and 15D of DC-DC converter 15 and for outputting the stepped-down voltage to main charging terminal 19. The operation at Step S67 is exactly identical to the operation at Step S29, that is, to continue turning on switching element 35 and to repetitively turning on and off switching elements 29 and 31. However, control circuit 23 changes the switching waveform of switching elements 29 and 31, so that inverter 17 can function as either a step-up converter or a step-down converter. Thus, as shown in FIG. 10A, control circuit 23 causes inverter 17 to function as a DC voltage conversion circuit that can both step down and up the voltage. Control circuit 23 then causes secondary battery 13 to be discharged to charge secondary battery 53 with a voltage output through main charging terminal 19.

Through the above-described construction and operation, charge-discharge device 11 reduces a risk of further discharging secondary battery 53 with the smaller state of charge SOC2, that is, with the smaller remaining amount of power, so that secondary battery 53, which needs power interchange, can be correctly charged with secondary battery 13 with the larger state of charge SOC1. In addition, charge-discharge device 11 can perform power interchange to supply power from the secondary battery with the larger remaining amount of power to the further secondary battery with the smaller remaining amount of power regardless of the connecting direction of outlet cable 85.

Regarding the remaining amount of power, at Step S63 shown in FIG. 9 of Embodiment 3, control circuit 23 compares the state of charge SOC1 with the state of charge SOC2 so as to compare the remaining amount of power in batteries 13 and 53. However, for example, in the case that the states of charge SOC1 and SOC2 are proportional to the secondary-battery voltages Vb and Vba of batteries 13 and 53, respectively, control circuit 23 may compare the remaining amount of power in batteries 13 and 53 by comparing the secondary-battery voltages Vb and Vba.

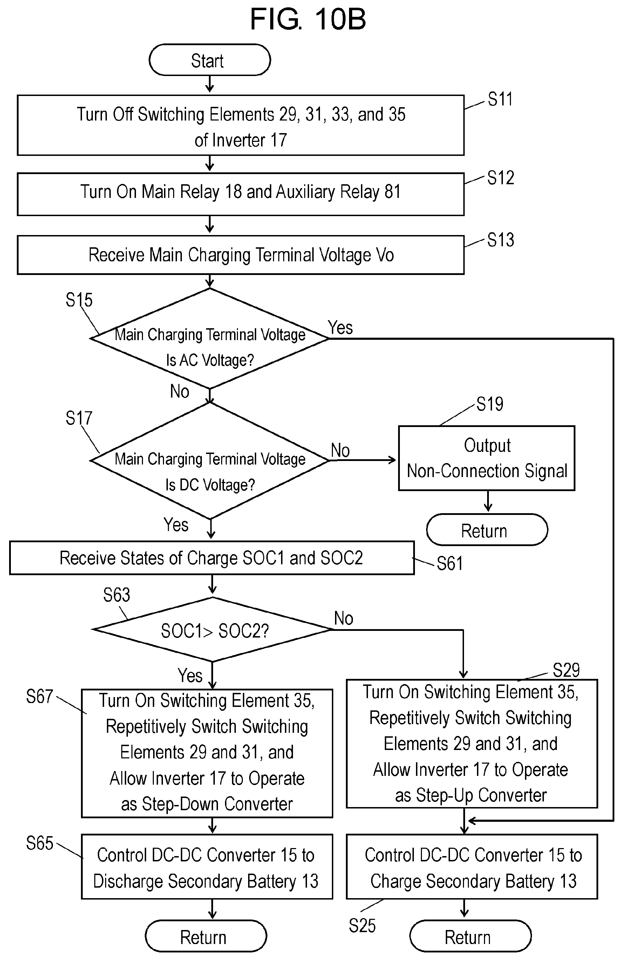

FIG. 10B is a flowchart showing still another operation of charge-discharge device 11. In FIG. 10B, items identical to those of the flowchart shown in FIGs. 9 and 10A are denoted by the same reference numerals. In the operation shown in FIG. 10B, control circuit 23 does not perform the operation at Step S27 shown in FIG. 10A, and instead, causes inverter 17 to function as a rectifying circuit as shown in FIG. 9.

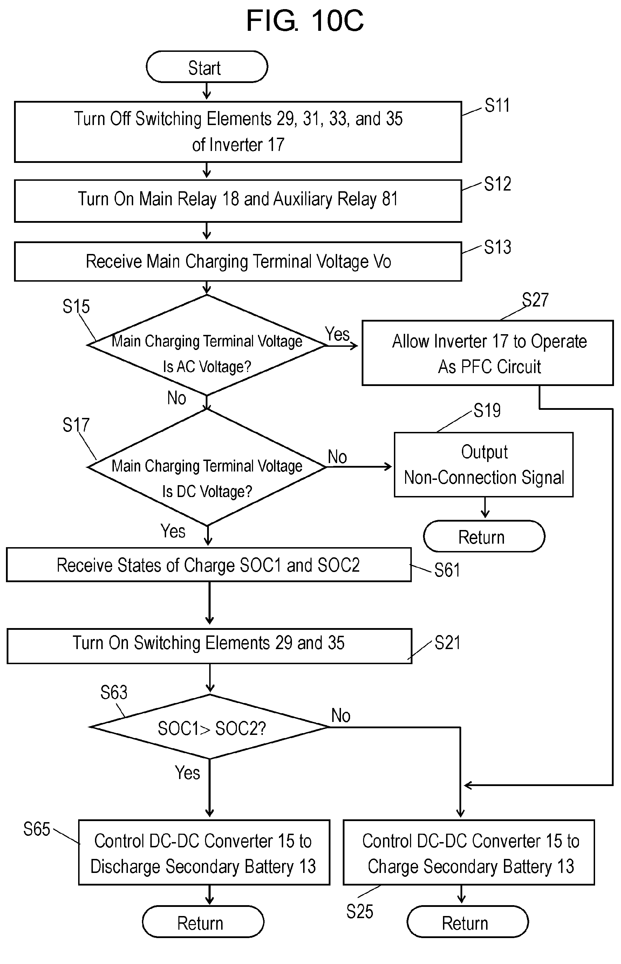

FIG. 10C is a flowchart showing a further operation of charge-discharge device 11. In FIG. 10C, items identical to those of the flowcharts shown in FIGs.9 and 10A are denoted by the same reference numerals. In FIG. 10C, control circuit 23 may perform the operations at Step S27 shown in FIG. 10A and Step S21 shown in FIG. 9, and does not perform the operations at Steps S29 and S67 shown in FIG. 10A.

### Exemplary Embodiment 4

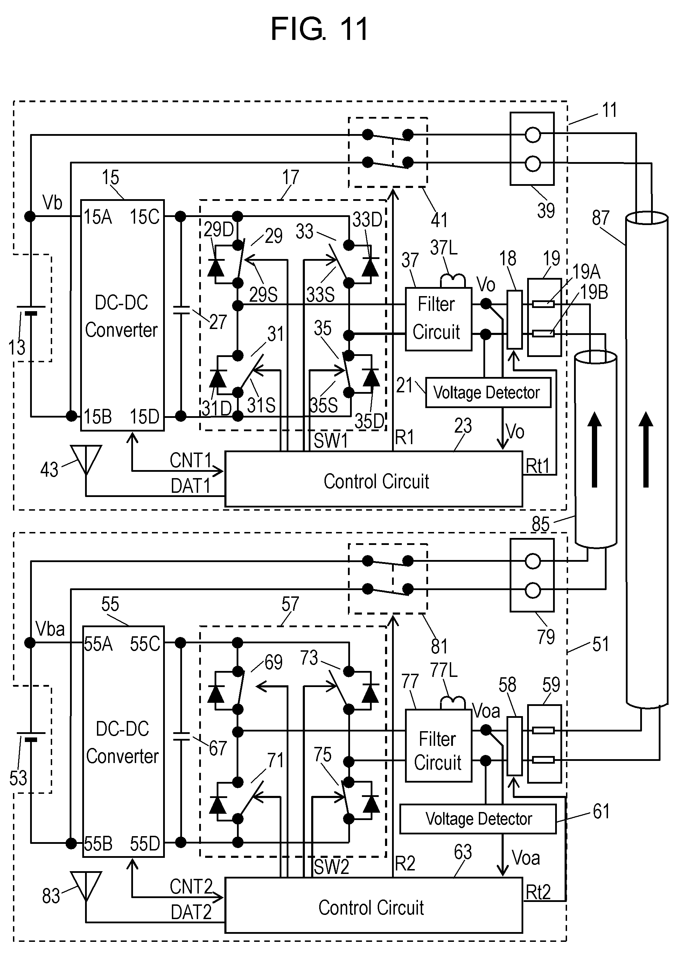

FIG. 11 is a block circuit diagram of charge-discharge device 11 according to Exemplary Embodiment 4 while charging DC power. In FIG. 11, components identical to those of charge-discharge devices 11 and 51 shown in FIGs. 1 and 2 are denoted by the same reference numerals.

As shown in FIG. 11, main charging terminal 19 of charge-discharge device 11 is connected to auxiliary charging terminal 79 of charge-discharge device 51 via outlet cable 85. Furthermore, main charging terminal 59 of charge-discharge device 51 is connected to auxiliary charging terminal 39 of charge-discharge device 11 via outlet cable 87. Control circuits 23 and 63 cause DC-DC converters 15 and 55 to charge secondary battery 13 with power stored in secondary battery 53. This configuration allows secondary battery 53 to be discharged to supply the power to secondary battery 13 via two outlet cables 85 and 87, thereby accelerating the charging of secondary battery 13.

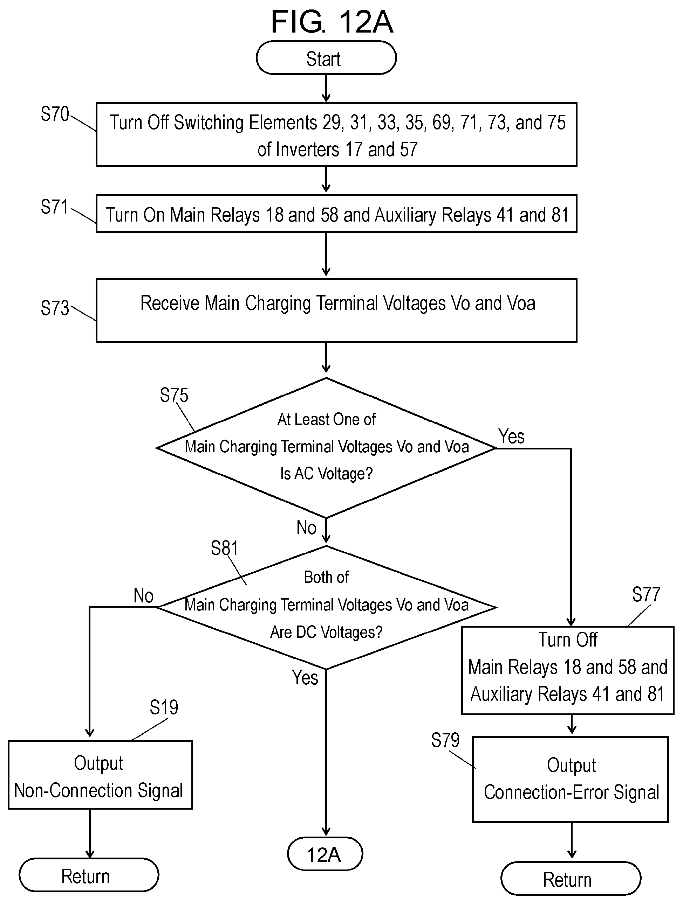

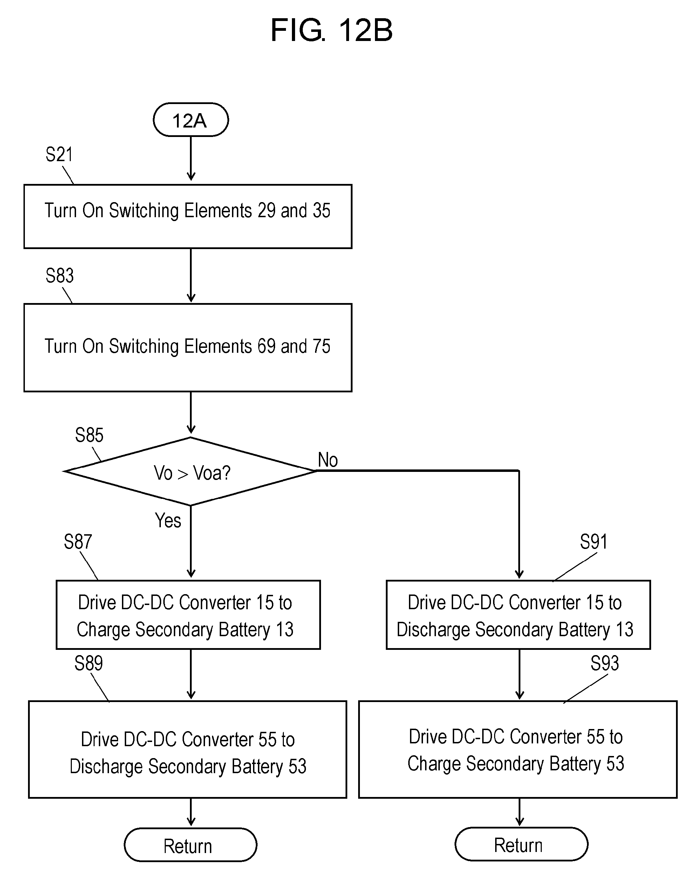

FIGs. 12A and 12B are flowcharts showing an operation of charge-discharge devices 11 and 51 according to Embodiment 4. In FIGs. 12A and 12B, items identical to those of the flowchart shown in FIG. 3 are denoted by the same reference numerals. The flowcharts shown in FIGs. 12A and 12B are a subroutine called from a main routine, similarly to the operation according to Embodiment 1.

Upon receiving an instruction from a user to start power interchange with the use of two outlet cables 85 and 87, control circuit 23 executes the subroutine of the flowcharts shown in FIGs. 12A and 12B. Control circuit 23 turns off switching elements 29, 31, 33, and 35 of inverter 17 first, and then, sends, to control circuit 63, data signal DAT1. As a result, control circuit 63 turns off switching elements 69, 71, 73, and 75 of inverter 57 (Step S70).

Control circuit 23 then turns on main relays 18 and 58, and auxiliary relays 41 and 81 (Step S71). Auxiliary relay 41 which is connected to control circuit 23 is directly turned on in response to the auxiliary relay signal R1. Auxiliary relay 81 of charge-discharge device 51 which is not directly connected to control circuit 23 is turned on by control circuit 23 sending control circuit 63 the data signal DAT1. Upon receiving the signal, control circuit 63 outputs the auxiliary relay signal R2 to turn on auxiliary relay 81. Control circuit 23 controls main relays 18 and 58 similarly to auxiliary relays 41 and 81.

Next, control circuit 23 receives the main charging-terminal voltages Vo and Voa (Step S73). More specifically, the charging-terminal voltage Voa is received by control circuit 63 first, and then, sent to control circuit 23 as the data signal DAT2.

Next, control circuit 23 determines whether at least one of the charging-terminal voltages Vo and Voa is an AC voltage or not (Step S75). If it is determined that at least one of the voltages Vo and Voa is an AC voltage at Step S75 ("Yes" at Step S75), control circuit 23 determines that at least one of main charging terminals 19 and 59 is connected to commercial AC power supply 25. Since this condition does not indicate power interchange with the use of the two cables, control circuit 23 turns off main relays 18 and 58 and auxiliary relays 41 and 81 (Step S77), and outputs a connection-error signal (Step S79). The connection-error signal notifies the user that the connection is not appropriate for power interchange with the use of the two cables. Control circuit 23 then terminates the subroutine shown in FIGs. 12A and 12B, and causes the process to return to the main routine.

If it is determined that both charging-terminal voltages Vo and Voa are not AC voltages at Step S75 ("No" at Step S75), control circuit 23 determines whether both voltages Vo and Voa are DC voltages or not (Step S81). If it is determined that at least one of the voltages Vo and Voa is not a DC voltage at Step S81 ("No" at Step S81), it is determined that at least one of main charging terminals 19 and 59 does not receive a voltage and is not connected to anything. Control circuit 23 then outputs a non-connection signal (Step S19), and causes the process to return to the main routine.

If it is determined that both voltages Vo and Voa are DC voltages at Step S81 ("Yes" at Step S81), control circuit 23 determines that secondary battery 13 can be charged by the power interchange with the use of two outlet cables 85 and 87. Control circuit 23 then turns on switching elements 29 and 35 while continuing turning off switching elements 31 and 33 (Step S21). Control circuit 23 then sends, to control circuit 63, a command as the data signal DAT1. This command turns on switching elements 69 and 75 while continuing off switching elements 71 and 73 in charge-discharge device 51. Upon receiving the data signal DAT1, control circuit 63 turns on switching elements 69 and 75 while continuing turning off switching elements 71 and 73. At Step S83, charge-discharge devices 11 and 51 operate as shown in FIG. 11. As shown in FIG. 11, main charging terminals 19 and 59 are electrically connected with DC-DC converters 15 and 55, respectively.

As shown in FIGs. 12A and 12B, control circuit 23 determines whether or not the main charging-terminal voltage Vo is higher than the main charging-terminal voltage Voa (Step S85). This step prevents the secondary battery with the higher voltage from being charged with the secondary battery with the lower voltage. More specifically, when the voltage Vo is higher than the voltage Voa at Step S85 ("Yes" at Step S85), control circuit 23 causes secondary battery 13 to be charged with secondary battery 53.

The charging-terminal voltage Vo is identical to the secondary-battery voltage Vba within an error range, and the charging-terminal voltage Voa is identical to the secondary-battery voltage Vb within an error range as follows. First, at Step S70, switching elements 29, 31, 33, and 35, 69, 71, 73, and 75 are all turned off. Therefore, the voltage of inverter 17 is not supplied to main charging terminal 19, or the voltage of inverter 57 is not supplied to main charging terminal 59. At Step S71, auxiliary relays 41 and 81 are turned on. As a result, main charging terminal 19 is electrically connected to secondary battery 53 via outlet cable 85, auxiliary charging terminal 79, and auxiliary relay 81. Similarly, main charging terminal 59 is electrically connected to secondary battery 13 via outlet cable 87, auxiliary charging terminal 39, and auxiliary relay 41. Hence, voltage detector 21 detects the secondary-battery voltage Vba as the main charging-terminal voltage Vo, whereas voltage detector 61 detects the secondary-battery voltage Vb as the main charging-terminal voltage Voa.

When the main charging-terminal voltage Vo is higher than the main charging-terminal voltage Voa at Step S85 ("Yes" at Step S85), the secondary-battery voltage Vba is higher than secondary-battery voltage Vb as described above. Therefore, control circuit 23 causes DC-DC converter 15 to charge secondary battery 13 (Step S87). Control circuit 23 then causes DC-DC converter 55 to discharge secondary battery 53 (Step S89). More specifically, at Step S89, control circuit 23 sends, to control circuit 63, the data signal DAT1 so as to drive DC-DC converter 55.

The above-described operation allows both DC-DC converters 15 and 55 to be involved in power interchange. Although it is necessary to operate two DC-DC converters 15 and 55, power interchange can be performed between batteries 13 and 53 more quickly via two simple, light-weight outlet cables 85 and 87.

Control circuit 23 then terminates the subroutine shown in FIGs. 12A and 12B, and the process returns to the main routine.

When the charging-terminal voltage Vo is not higher than the charging-terminal voltage Voa at Step S85 ("No" at Step S85), control circuit 23 causes DC-DC converter 15 to discharge secondary battery 13 (Step S91). Control circuit 23 then causes DC-DC converter 55 to charge secondary battery 53 (Step S93). This operation performs power interchange even when the relation between the secondary-battery voltages Vb and Vba is reversed.

Control circuit 23 then terminates the subroutine shown in FIGs. 12A and 12B, and the process returns to the main routine.

According to Embodiment 4, If at least one of the main charging-terminal voltages Vo and Voa is an AC voltage at Step S79 shown in FIGs. 12A and 12B, control circuit 23 outputs a connection error signal, and does not charge secondary battery 13. As a result, an AC voltage is not supplied to inverter 17, hence not requiring control circuits 23 and 63 to cause inverter 17 or 57 to function as a power factor correction circuit.

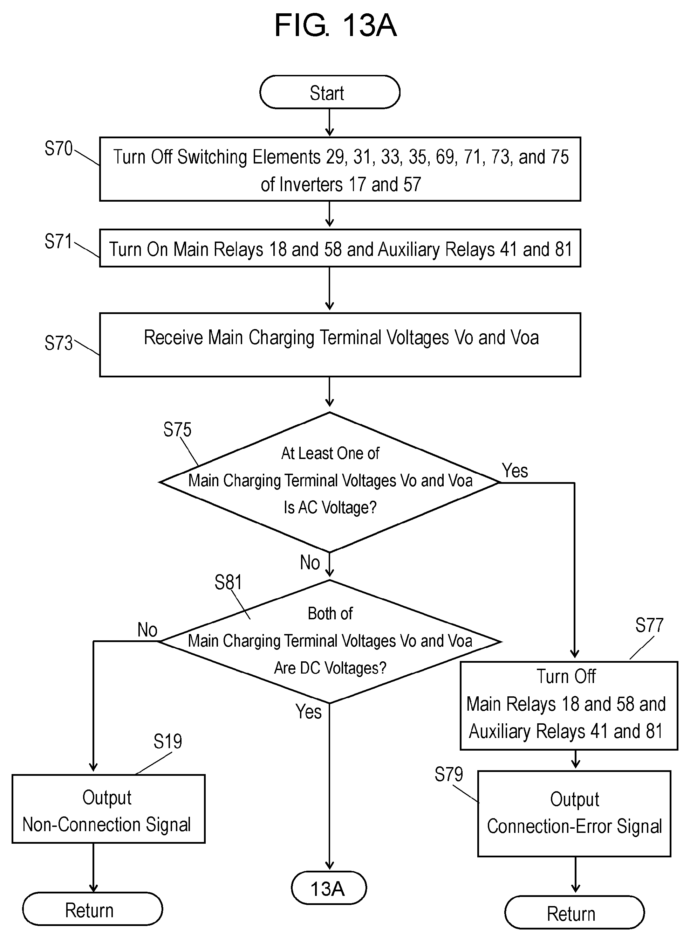

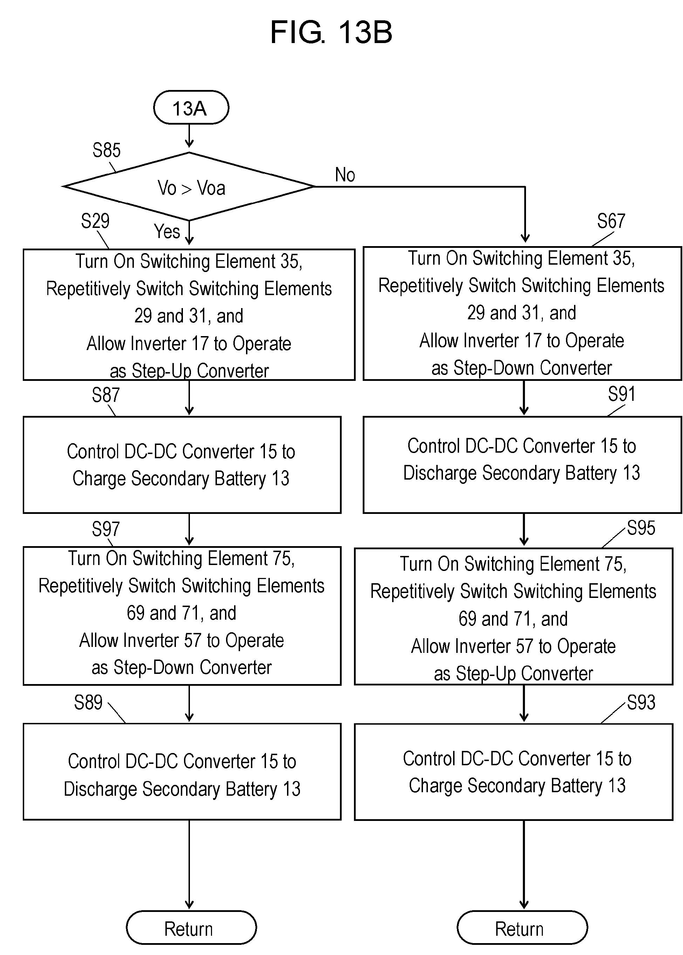

Similar to Embodiments 1 to 3, according to Embodiment 4, when the main charging-terminal voltages Vo and Voa are DC voltages, control circuits 23 (63) may cause inverters 17 and 57 to function as DC voltage conversion circuits. FIGs. 13A and 13B are flowcharts showing another operation of charge-discharge devices 11 and 51 according to Embodiment 4. In FIGs. 13A and 13B, items identical to those of the flowchart shown in FIGs. 12A and 12B are denoted by the same reference numerals.

When both the main charging-terminal voltages Vo and Voa are DC voltages at Step S81 ("Yes" at Step S81), control circuit 23 causes inverters 17 and 57 to function as DC voltage conversion circuits. Consequently, control circuit 23 does not perform the operations at Steps S21 and S83 shown in FIGs. 12A and 12B.

Control circuit 23 then determines whether or not the main charging-terminal voltage Vo is higher than the main charging-terminal voltage Voa (Step S85). If the voltage Vo is not higher than the voltage Voa at Step S85 ("No" at Step S85), in order to discharge secondary battery 13, control circuit 23 alternately turns on and off switching elements 29 and 31 at a predetermined frequency while continuing turning off switching element 33 and continuing turning off switching element 35, similarly to the operation shown in FIG. 10A. As a result, inverter 17 in cooperation with inductor 37L of filter circuit 37 functions as a step-down converter which is a DC voltage conversion circuit for stepping down the voltage across smoothing capacitor 27, that is, between ports 15C and 15D of DC-DC converter 15 and for outputting the stepped-down voltage to main charging terminal 19 (Step S67). Control circuit 23 then causes DC-DC converter 15 to discharge secondary battery 13 (Step S91). Control circuit 23 then sends, to control circuit 63, the data signal DAT1 requiring that inverter 57 function as a step-up converter. Upon receiving the data signal DAT1, control circuit 63 alternately turns on and off switching elements 69 and 71 at a predetermined frequency while continuing turning off switching element 73 and continuing turning on switching element 75. As a result, inverter 57 in cooperation with inductor 77L of filter circuit 77 functions as a step-up converter which is a DC voltage conversion circuit for stepping up the charging-terminal voltage Voa and applying the stepped-up voltage across smoothing capacitor 67, that is, between ports 55C and 55D of DC-DC converter 55 (Step S95). Control circuit 23 then causes DC-DC converter 55 to charge secondary battery 53 (Step S93). Thus, secondary battery 53 is charged via the two outlet cables.

If the charging-terminal voltage Vo is higher than the charging-terminal voltage Voa at Step S85 ("Yes" at Step S85), in order to charge secondary battery 13, control circuit 23 alternately turns on and off switching elements 29 and 31 at a predetermined frequency while continuing turning off switching element 33 and continuing turning on switching element 35. As a result, inverter 17 in cooperation with inductor 37L of filter circuit 37 functions as a step-up converter which is a DC voltage conversion circuit for stepping up the charging-terminal voltage Vo and applying the stepped-up voltage across smoothing capacitor 27, that is, between ports 15C and 15D of DC-DC converter 15 (Step S29). Control circuit 23 then causes DC-DC converter 15 to charge secondary battery 13 (Step S87). Control circuit 23 then sends, to control circuit 63, the data signal DAT1 as to alternately turn on and off switching elements 69 and 71 at a predetermined frequency while continuing turning off switching element 73 and continuing turning on switching element 75. As a result, inverter 57 in cooperation with inductor 77L of filter circuit 77 functions as a step-down converter which is a DC voltage conversion circuit for stepping down the voltage across smoothing capacitor 67, that is, between ports 55C and 55D of DC-DC converter 55 and for outputting the stepped-down voltage to main charging terminal 59 (Step S97). Control circuit 23 then causes DC-DC converter 55 to discharge secondary battery 53 (Step S89). Thus, secondary battery 13 is charged via the two outlet cables.

The above-described construction and operation allows secondary battery 53 to be discharged to charge secondary battery 13 via two simple, light-weight outlet cables 85 and 87, so that charge-discharge devices 11 and 51 can quickly perform power interchange to charge secondary battery 13.

According to Embodiment 4, which of batteries 13 and 53 to be charged is determined based on the secondary-battery voltages Vb and Vba, but may alternatively be determined by comparing the states of charge SOC1 and SOC2 of batteries 13 and 53, similarly to Embodiment 3.

According to Embodiment 4, power interchange is performed by determining the direction of charging as described above. Alternatively, instead of determining the direction of charging, a warning may be output when it is necessary that charging be performed in the direction opposite to that specified by the user. The warning can reduce a risk of performing power interchange that is not intended by the user.

It is possible to combine the construction and operation according to Embodiment 2 with those of Embodiment 4. In this case, power interchange can be performed correctly by connecting outlet cable 85 to main charging terminal 19 and auxiliary charging terminal 79 in the opposite direction, or alternatively, by connecting outlet cable 87 to main charging terminal 59 and auxiliary charging terminal 39 in the opposite direction.

As described above, charge-discharge device 11 includes DC-DC converter 15 configured to be electrically connected to secondary battery13, inverter 17 electrically connected to DC-DC converter 15, main charging terminal 19 electrically connected to inverter 17, voltage detector 21 for detecting a voltage of main charging terminal 19, and control circuit 23 electrically connected to DC-DC converter 15, inverter 17, and voltage detector 21. Control circuit 23 is operable to control inverter 17 and DC-DC converter 15 to cause DC-DC converter 15 to output a direct-current (DC) voltage based on power stored in secondary battery 13 and to cause inverter 17 to convert the DC voltage output from DC-DC converter 15 to an alternating-current (AC) voltage. While secondary battery 13 is charged with the voltage input to main charging terminal 19, when the voltage detected by voltage detector 21 is an AC voltage, control circuit 23 controls inverter 17 and DC-DC converter 15: to cause inverter 17 to function as a rectifying circuit or a power factor correction circuit as to supply a DC voltage to DC-DC converter 15; and to cause DC-DC converter 15 to charge secondary battery 13 with the supplied DC voltage. While secondary battery 13 is charged with the voltage input to main charging terminal 19, when the voltage detected by voltage detector 21 is a DC voltage, control circuit 23 switches, according to the voltage, between (1) an operation to cause inverter 17 to supply the voltage substantially intactly to DC-DC converter 15 and cause DC-DC converter 15 to charge secondary battery13 and (2) an operation to cause inverter 17 to function as a DC voltage conversion circuit that converts the voltage and supplies the converted voltage to DC-DC converter 15 and cause DC-DC converter 15 to charge secondary battery 13.

While secondary battery 13 is charged with the voltage input to main charging terminal 19, when the voltage detected by voltage detector 21 is the DC voltage, the voltage detector may detect a polarity of the DC voltage. I this case, while secondary battery 13 is charged with the voltage input to main charging terminal 19, when the voltage detected by voltage detector 21 is the DC voltage, control circuit 23 causes inverter 17 to supply the voltage to DC-DC converter 15 at a constant polarity depending on the polarity of the DC voltage.

Charge-discharge device 11 may further include auxiliary relay 41 configured to be connected to secondary battery13, and auxiliary charging terminal 39 configured to be electrically connected to secondary battery 13 via auxiliary relay 41. Charge-discharge device 11 may be configured to be used with further charge-discharge device 51 configured to be connected to further secondary battery 53. Further charge-discharge device 51 includes further auxiliary relay 81 configured to be connected to further secondary battery 53, and further auxiliary charging terminal 79 configured to be electrically connected to further secondary battery 53 via further auxiliary relay 81. Main charging terminal 19 is configured to be connected to further auxiliary charging terminal 79 via outlet cable 85 while secondary battery 13 is charged with power stored in further secondary battery 53. Control circuit 23 is operable to turn on further auxiliary relay 81 while secondary battery 13 is charged with the power stored in further secondary battery 53.

Further charge-discharge device 51 may further include further control circuit 63 operable to turn on and off further auxiliary relay 81. While secondary battery 13 is charged with the power stored in further secondary battery 53, control circuit 23 communicates with further control circuit 53 to cause further control circuit 53 to turn on and off further auxiliary relay 81.

While secondary battery 13 is charged with the power stored in further secondary battery 53, control circuit 13 may be operable: to receive a state of charge SOC1 of secondary battery 13; to receive a further state of charge SOC2 of further secondary battery 53 by communicating with further control circuit 53; and to determine, according to the state of charge SOC1 and the further state of charge SOC2, whether charging of secondary battery 13 is terminated or not.

When the state of charge SOC1 is not larger than the further state of charge SOC2, control circuit 23 may cause DC-DC converter 15 to charge secondary battery 13 with the power stored in further secondary battery 53.

Control circuit 13 may wirelessly communicate with further control circuit 53.

Further charge-discharge device 51 may include further DC-DC converter 55 configured to be connected to further secondary battery 53, further main charging terminal 59 electrically connected to further secondary battery 53 via at least the further DC-DC converter57, and further control circuit 53 connected to further DC-DC converter 55. While the main charging terminal 19 is connected to the further auxiliary charging terminal 79 via the outlet cable 85 and the further main charging terminal 59 is connected to the auxiliary charging terminal 39 via further outlet cable 87, control circuit 13 is operable to cause DC-DC converter 15 to charge the secondary battery 13 with the power stored in the further secondary battery 53, and control the further control circuit 53 to cause the further DC-DC converter 55 to charge the secondary battery 13 with the power stored in the further secondary battery 53.

Charge-discharge device 11 according to Embodiments 1 to 4 is configured to be mounted to an electric vehicle, but may alternatively be used to perform power interchange between common secondary batteries in, e.g. a power storage system.

### INDUSTRIAL APPLICABILITY

A charge-discharge device according to the present invention performs power interchange between electric vehicles via a simple, light-weight outlet cable, and is useful as a charge-discharge device to perform power interchange between electric vehicles at emergency.

### REFERENCE MARKS IN THE DRAWINGS

11 charge-discharge device
13 secondary battery
15 DC-DC converter
17 inverter
19 main charging terminal
21 voltage detector
23 control circuit
39 auxiliary charging terminal
41 auxiliary relay
53 secondary battery (further secondary battery)
55 DC-DC converter (further DC-DC converter)
59 main charging terminal (further main charging terminal)
63 control circuit (further control circuit)
79 auxiliary charging terminal (further auxiliary charging terminal)
81 auxiliary relay (further auxiliary relay)
85 outlet cable
87 outlet cable (further outlet cable)

## Claims

1. A charge-discharge device comprising:
a DC-DC converter configured to be electrically connected to a secondary battery;
an inverter electrically connected to the DC-DC converter;
a main charging terminal electrically connected to the inverter;
a voltage detector for detecting a voltage of the main charging terminal; and
a control circuit electrically connected to the DC-DC converter, the inverter, and the voltage detector,
wherein the control circuit is operable to control the inverter and the DC-DC converter to:
cause the DC-DC converter to output a direct-current (DC) voltage based on power stored in the secondary battery; and
cause the inverter to convert the DC voltage output from the DC-DC converter to an alternating-current (AC) voltage,
wherein, while the secondary battery is charged with the voltage input to the main charging terminal, when the voltage detected by the voltage detector is an AC voltage, the control circuit controls the inverter and the DC-DC converter to:
cause the inverter to function as a rectifying circuit or a power factor correction circuit as to supply a DC voltage to the DC-DC converter; and
cause the DC-DC converter to charge the secondary battery with the supplied DC voltage, and
wherein, while the secondary battery is charged with the voltage input to the main charging terminal, when the voltage detected by the voltage detector is a DC voltage, the control circuit switches, according to the voltage, between:
an operation to cause the inverter to supply the voltage substantially intactly to the DC-DC converter, and cause the DC-DC converter to charge the secondary battery; and
an operation to cause the inverter to function as a DC voltage conversion circuit that converts the voltage and supplies the converted voltage to the DC-DC converter, and cause the DC-DC converter to charge the secondary battery.

2. The charge-discharge device of claim 1,
wherein, while the secondary battery is charged with the voltage input to the main charging terminal, when the voltage detected by the voltage detector is the DC voltage, the voltage detector is operable to detect a polarity of the DC voltage, and
wherein, while the secondary battery is charged with the voltage input to the main charging terminal, when the voltage detected by the voltage detector is the DC voltage, the control circuit is operable to cause the inverter to supply the voltage to the DC-DC converter at a constant polarity depending on the polarity of the DC voltage.

3. The charge-discharge device of claim 1, further comprising:
an auxiliary relay configured to be connected to the secondary battery; and
an auxiliary charging terminal configured to be electrically connected to the secondary battery via the auxiliary relay,
wherein the charge-discharge device is configured to be used with a further charge-discharge device configured to be connected to a further secondary battery,
wherein the further charge-discharge device comprises:
a further auxiliary relay configured to be connected to the further secondary battery; and
a further auxiliary charging terminal configured to be electrically connected to the further secondary battery via the further auxiliary relay,
wherein the main charging terminal is configured to be connected to the further auxiliary charging terminal via an outlet cable while the secondary battery is charged with power stored in the further secondary battery, and
wherein the control circuit is operable to turn on the further auxiliary relay while the secondary battery is charged with the power stored in the further secondary battery.

4. The charge-discharge device of claim 3,
wherein the further charge-discharge device further comprises a further control circuit operable to turn on and off the further auxiliary relay, and
wherein, while the secondary battery is charged with the power stored in the further secondary battery, the control circuit communicates with the further control circuit to cause the further control circuit to turn on and off the further auxiliary relay.

5. The charge-discharge device of claim 4, wherein, while the secondary battery is charged with the power stored in the further secondary battery, the control circuit is operable to:
receive a state of charge of the secondary battery;
receive a further state of charge of the further secondary battery by communicating with the further control circuit; and
determine, according to the state of charge and the further state of charge, whether charging of the secondary battery is terminated or not.

6. The charge-discharge device of claim 4, wherein the control circuit is operable to:
receive a state of charge of the secondary battery;
receive a further state of charge of the further secondary battery by communicating with the further control circuit; and
causes the DC-DC converter to charge the further secondary battery when the state of charge is larger than the further state of charge.

7. The charge-discharge device of claim 6, wherein, when the state of charge is not larger than the further state of charge, the control circuit is operable to cause the DC-DC converter to charge the secondary battery with the power stored in the further secondary battery.

8. The charge-discharge device of claim 4, wherein the control circuit wirelessly communicates with the further control circuit.

9. The charge-discharge device of claim 3,
wherein the further charge-discharge device comprises:
a further DC-DC converter configured to be connected to the further secondary battery;
a further main charging terminal electrically connected to the further secondary battery via at least the further DC-DC converter; and
a further control circuit connected to the further DC-DC converter, and
wherein, while the main charging terminal is connected to the further auxiliary charging terminal via the outlet cable and the further main charging terminal is connected to the auxiliary charging terminal via a further outlet cable, the control circuit is operable to:
cause the DC-DC converter to charge the secondary battery with the power stored in the further secondary battery; and
control the further control circuit to cause the further DC-DC converter to charge the secondary battery with the power stored in the further secondary battery.
